# FASCICULE DE BREVET EUROPEEN

(11) **EP 0 974 448 B1**
(45) Date de publication et mention de la délivrance du brevet: **06.05.2004**
(21) Numéro de dépôt: 99113761.3
(22) Date de dépôt: 14.07.1999
(51) Int. Cl.: B29D 30/32, B29D 30/24

(54) **Appareillage et procédé de fabrication de pneumatiques**
Verfahren und Vorrichtung zur Herstellung von Luftreifen
A tyre manufacturing process and apparatus

(30) Priorité: 23.07.1998 FR 9809594
(43) Date de publication de la demande: 26.01.2000
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Bailey, Dave, Oplika, Alabama 36804 (US); Evangelista, Marc, Greer, South Carolina 29651 (US); Steiner, William, Simpsonville, South Carolina 2968 (US)
(74) Mandataire: Bauvir, Jacques

(56) Documents cités:
- DE-A- 2 511 160
- LU-A- 43 253
- US-A- 1 911 594
- US-A- 2 605 198
- US-A- 2 951 526

## Description

La présente invention concerne un procédé de fabrication de pneumatiques et des tambours d'assemblage permettant la mise en oeuvreoeuvre du procédé.

L'invention concerne plus particulièrement la fabrication de pneumatiques comprenant une armature de carcasse et, dans les bourrelets, au moins une tringle de renforcement autour de laquelle l'armature de carcasse est enroulée en formant un retournement de telle façon que, contrairement à ce qui est généralement réalisé, le retournement de l'armature de carcasse soit disposé entre la tringle et l'armature de carcasse elle-même.

Certains procédés de fabrication utilisent des tambours d'assemblage possédant notamment des épaulements contre lesquels la tringle est amenée en décrivant un mouvement axial. La tringle est maintenue contre l'épaulement par simple collage des produits entre eux ou par un dispositif accessoire. De tels tambours peuvent utiliser directement des tringles ou des produits semi-finis fabriqués à part et constitués par la tringle surmontée radialement d'un profilé de mélange caoutchouteux. Dans la suite, on nommera « complexe-tringle » une tringle seule ou une tringle surmontée d'un profilé de mélange caoutchouteux, comportant éventuellement en outre un produit d'enrobage de la tringle tel qu'un autre profilé de mélange caoutchouteux ou une nappe de caoutchouc comprenant des câbles.

A titre d'exemple on peut citer la publication FR-1 397 751 décrivant un tel tambour d'assemblage à épaulements, qui possède une seule position de travail, non expansible, pour enrouler la carcasse, et une position rétractée (radialement) afin d'extraire axialement la carcasse de pneumatique réalisée. Les complexes-tringle sont déposés lors de la fabrication de la carcasse respectivement sur chaque épaulement, et sont maintenus en place par un dispositif accessoire translatable axialement.

Ces tambours permettent la fabrication de pneumatiques selon des étapes de procédé consistant, une fois l'armature de carcasse positionnée sur le tambour, ses extrémités dépassant axialement de la surface du tambour, :
- à appliquer ces extrémités contre les épaulements du tambour généralement à l'aide de doigts de rabattage déplacés axialement,
- puis à positionner les complexes-tringle contre les épaulements du tambour,
- enfin à actionner des dispositifs de retroussage, généralement constitués par des vessies gonflables, afin de relever les extrémités de l'armature de carcasse sur les complexes-tringle et de réaliser ainsi un retournement de l'armature de carcasse autour desdits complexes-tringle sans modifier leur positionnement.

Il n'est donc pas possible, avec de tels tambours, de disposer le retournement de l'armature de carcasse entre la tringle et l'armature de carcasse elle-même. En effet, ce procédé n'est pas capable de rabattre les extrémités de l'armature de carcasse sous les complexes-tringle lorsque ceux-ci sont déjà positionnés contre la carcasse.

L'invention a donc pour objet la fabrication d'un pneumatique utilisant des complexes-tringle et dans lequel le retournement de l'armature de carcasse est positionné entre la tringle et ladite armature de carcasse. La demande de brevet EP 99/107552 déposée le 15 avril 1999 et constituant un droit européen antérieur, décrit un tambour comportant deux gorges pour le positionnement d'une tringle, et conçu pour la réalisation d'un tel pneumatique, ainsi qu'un procédé convenable. Ce tambour appartient à la catégorie des tambours parfois appelés tambours plats. La demande de brevet EP 99/107551 déposée le 15 avril 1999 et constituant un droit européen antérieur, décrit un tambour semblable au précédent, sauf qu'il est spécialement conçu pour la fabrication d'un pneumatique dont les tringles sont de diamètres différents dans l'un et l'autre des bourrelets.

L'invention a pour objectif de proposer, toujours pour la fabrication d'un pneumatique utilisant des complexes-tringle et dans lequel le retournement de l'armature de carcasse est positionné entre la tringle et ladite armature, des tambours d'assemblage du type dit « semi-noyau », encore appelés « à épaulements », c'est à dire des tambours dépourvus de gorges de positionnement pour les tringles. L'invention propose également des procédés convenables pour ces tambours à épaulements.

Selon l'invention, le procédé de fabrication d'un pneumatique comporte les étapes suivantes :
- déposer une armature de carcasse sur une surface de réception principale généralement cylindrique, l'une au moins des extrémités latérales de l'armature de carcasse étant déposée à l'aplomb d'une première surface d'appui cylindrique, coaxiale à la surface de réception principale,
- appliquer l'extrémité de l'armature de carcasse sur la première surface d'appui,
- déposer un profilé de mélange caoutchouteux sur cette extrémité de l'armature de carcasse,
- retourner ladite extrémité latérale autour du profilé de mélange caoutchouteux tout en maintenant ledit profilé substantiellement immobile,
- déposer un complexe-tringle sur le retournement ainsi réalisé et axialement à l'intérieur de l'endroit de dépose du profilé.

De façon pratique, les deux côtés du tambour sont conçus de la même façon, de sorte que l'autre des extrémités latérales de l'armature de carcasse est également déposée à l'aplomb d'une première surface d'appui cylindrique, disposée axialement de l'autre côté, également coaxiale et de diamètre inférieur à la surface de réception principale.

Avantageusement, le retournement de l'extrémité de l'armature de carcasse autour du profilé de mélange caoutchouteux est réalisé :
- en relevant radialement ladite extrémité de sorte qu'elle soit orientée sensiblement radialement,
- puis en rapprochant axialement le complexe-tringle vers le centre de l'armature de carcasse jusqu'à l'appui de l'extrémité sur le complexe-tringle,
- et en poursuivant le rapprochement axial du complexe-tringle qui passe au-dessus du profilé de mélange caoutchouteux.

Plus particulièrement, on relève radialement l'extrémité de l'armature de carcasse en appuyant radialement vers l'extérieur dans une zone de ladite extrémité située axialement extérieurement au profilé de mélange caoutchouteux.

Comme évoqué ci-dessus, en pratique, les deux extrémités latérales de l'armature de carcasse font l'objet de manipulations si pas en tous points identiques (car il peut s'agir de fabriquer des pneumatiques dont le diamètre des tringles n'est pas le même dans chacun des bourrelets), du moins semblables en leur principe.

D'autres caractéristiques et avantages de l'invention apparaîtront à la lecture des différentes variantes de réalisation de l'invention en référence au dessin annexé dans lequel :
- la figure 1 est une coupe axiale partielle d'un appareillage pour la fabrication de pneumatique selon un premier mode de réalisation de l'invention,
- la figure 2 est une coupe partielle selon le plan P, du tambour de l'appareillage représenté sur la figure 1,
- la figure 3 est une coupe axiale partielle d'un appareillage selon une variante du premier mode de réalisation de l'invention,
- les figures 4A à 4J sont des représentations schématiques en coupe axiale partielle illustrant les différentes phases de la fabrication d'un pneumatique avec l'appareillage selon le premier mode de réalisation de l'invention,
- la figure 5 est une coupe axiale partielle d'un appareillage pour la fabrication de pneumatique selon un deuxième mode de réalisation de l'invention,
- la figure 6 est une coupe axiale partielle d'un appareillage pour la fabrication de pneumatique selon un troisième mode de réalisation de l'invention,
- la figure 7 est une coupe axiale partielle d'un appareillage pour la fabrication de pneumatique selon un quatrième mode de réalisation de l'invention,
- la figure 8 est une coupe transversale de l'appareillage représenté sur la figure 5 selon la ligne VIII de ladite figure 5,
- la figure 9 est une coupe axiale partielle de l'appareillage illustré à la figure 6, pris dans une configuration différente,
- les figures 10A à 10G sont des représentations schématiques en coupe axiale partielle illustrant les différentes phases de la fabrication d'un pneumatique avec l'appareillage selon le deuxième mode de réalisation de l'invention,
- les figures 11A à 11G sont des représentations schématiques en coupe axiale partielle illustrant les différentes phases de la fabrication d'un pneumatique avec l'appareillage selon le troisième mode de réalisation de l'invention,
- les figures 12A à 12F sont des représentations schématiques en coupe axiale partielle illustrant les différentes phases de la fabrication d'un pneumatique avec l'appareillage selon le quatrième mode de réalisation de l'invention.

On propose ci-dessous différents types d'appareillage pour mettre en oeuvre l'invention. Dans l'ensemble de la description, on désignera par les mêmes références les éléments communs aux différentes variantes. A la lumière de la présente description, l'homme du métier pourra très facilement exécuter des appareillages symétriques ou non. Il suffit, pour exposer le concept de l'invention, d'expliquer en détails une seule moitié axiale. On se limitera donc, dans ce qui suit, à la description de la partie de l'appareillage situé à droite du plan CP sur les différentes figures.

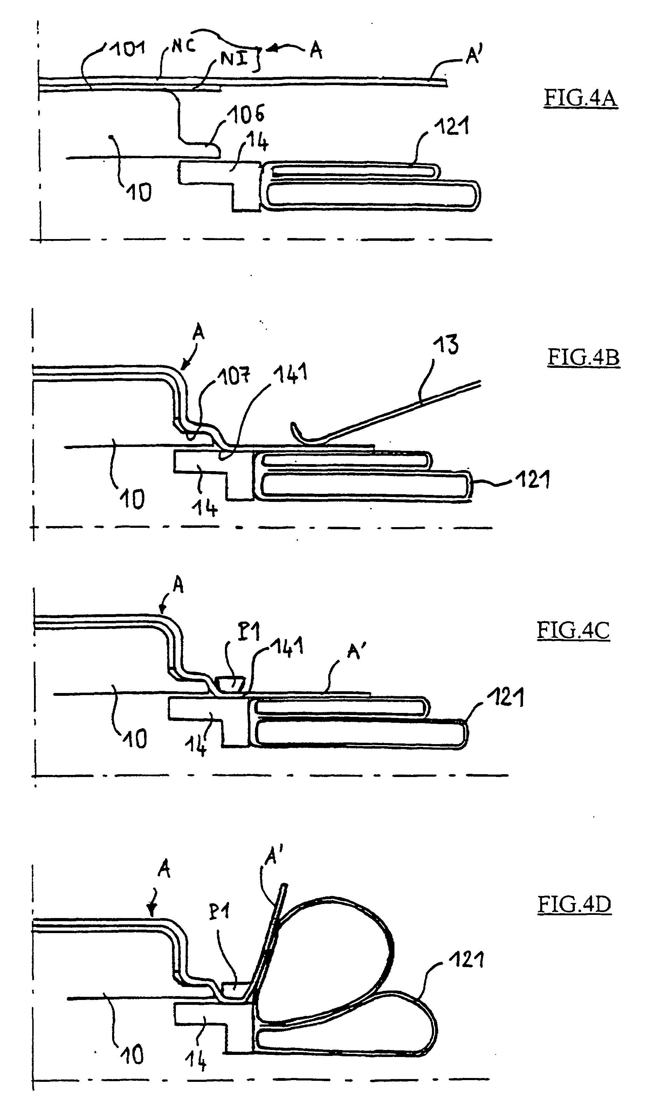

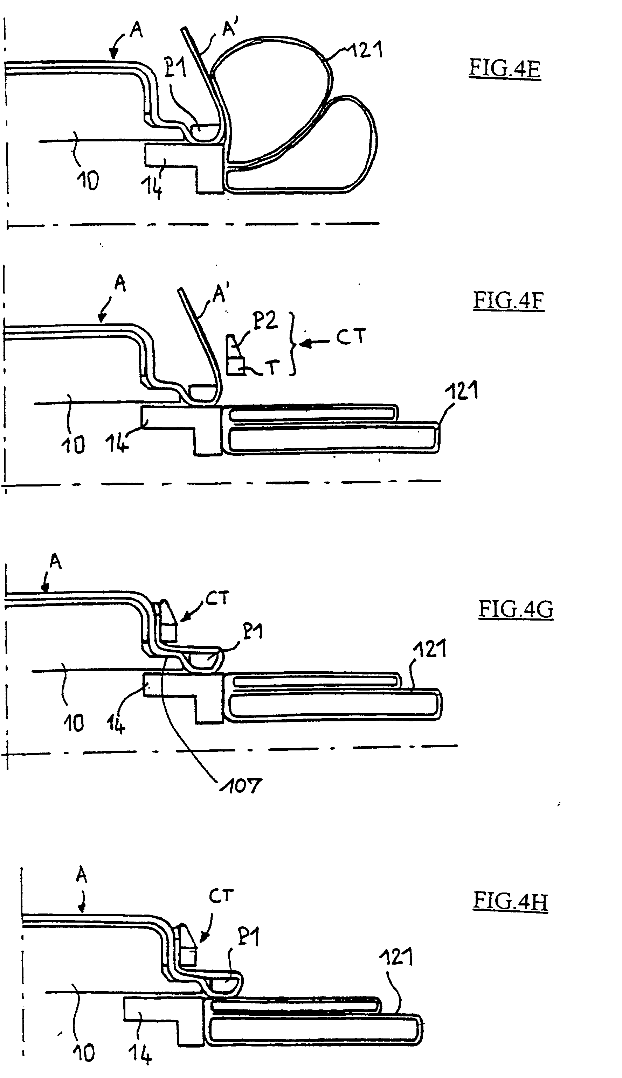

Comme évoqué par ailleurs, l'invention trouve également intérêt à être utilisé lorsque les bourrelets du pneumatique sont symétriques ou sont de diamètres différents.
L'appareillage 1 comporte un tambour d'assemblage 10 monté sur un arbre 11, un dispositif de retroussage 12, un dispositif (non représenté) d'amenée du complexe-tringle translatable axialement vers et depuis le tambour 10, en laissant libre le volume à l'intérieur des complexes-tringle. Le dispositif d'amenée du complexe-tringle peut prendre la forme par exemple d'un anneau portant des doigts d'accrochage du complexe-tringle, ou d'un anneau avec accrochage magnétique ou encore d'une couronne. L'appareillage comprend également un dispositif comportant des doigts de rabattage 13, schématisés sur la figure 4B. Ce dernier peut être intégré avec le dispositif d'amenée du complexe-tringle.

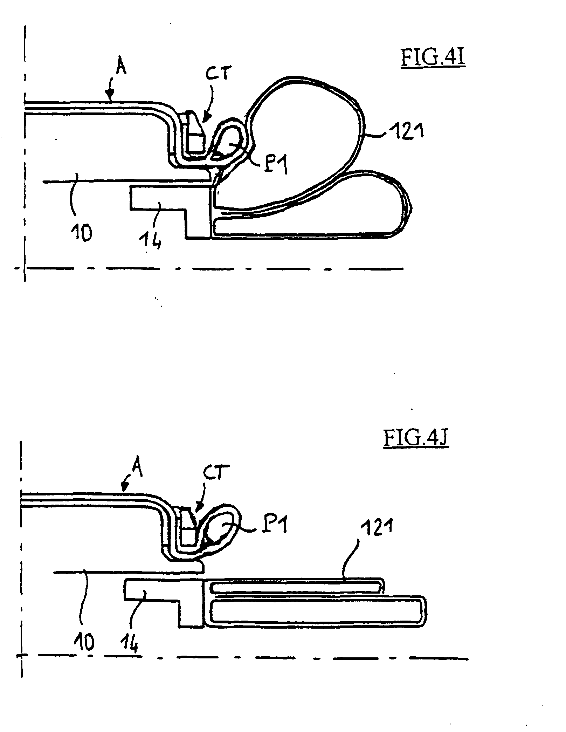

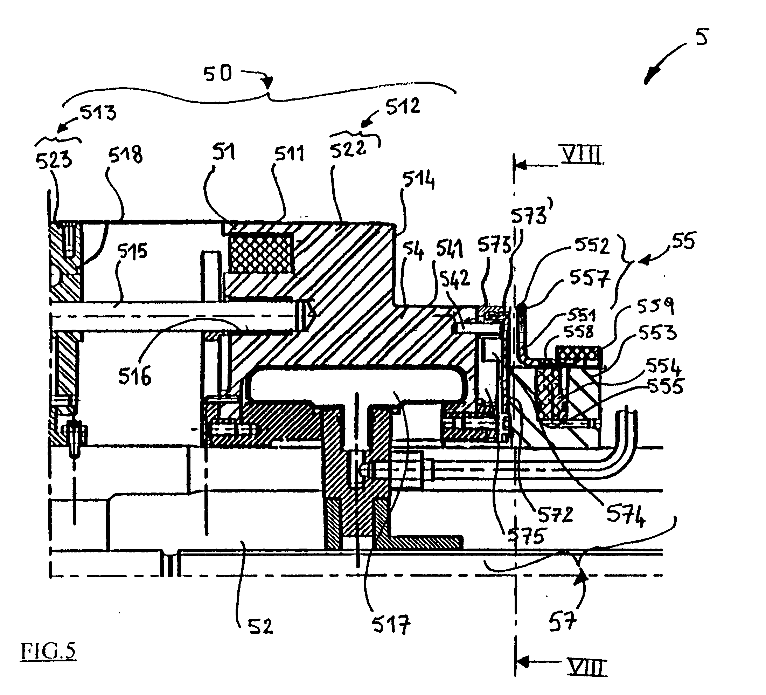

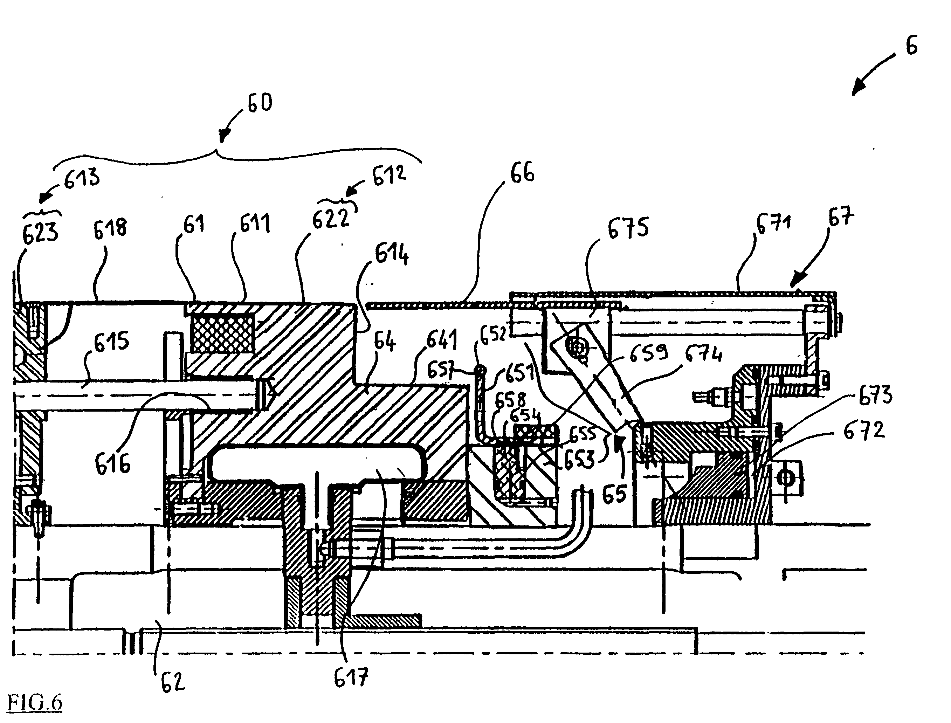

Le dispositif de retroussage 12 disposé axialement extérieurement au tambour 10, comporte un support 122 monté à coulissement possible sur l'arbre 11. Le dispositif de retroussage 12 comprend aussi des membranes gonflables 121 portées par ledit support 122. On peut également envisager d'utiliser, à la place des membranes, un dispositif de retroussage comportant essentiellement des doigts de relevage. Un tel dispositif sera décrit plus précisément dans la suite de la description en référence aux figures 5 et 6.

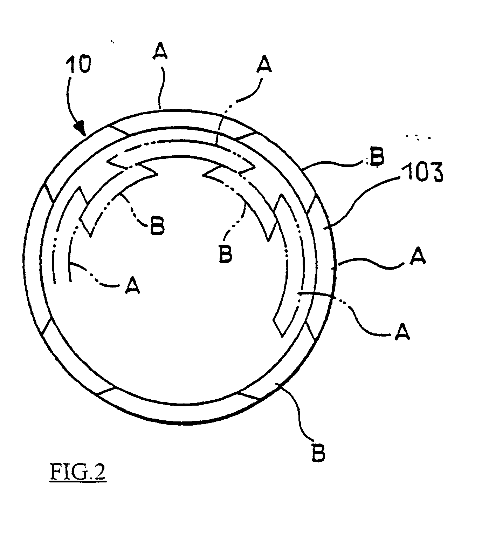

Le tambour d'assemblage 10 présente une surface de réception principale 101, généralement cylindrique, et présente au moins un épaulement 102. La surface de réception principale 101 est constituée par des segments 103 juxtaposés circonférentiellement en position de travail du tambour et montés, par l'intermédiaire de biellettes 105, à déplacement radial par rapport à des supports 104, montés sur l'arbre 11. Les segments 103 permettent de rétracter radialement le tambour 10 pour l'extraction (axialement) des carcasses réalisées sur ledit tambour. Ainsi les segments 103 constituent un système de plusieurs segments adjacents circonférentiellement, les faces latérales circonférentiellement de certains (B) étant convergentes à l'intérieur du tambour (appelons-les par convention « les voûtes »), et les faces latérales circonférentiellement des autres (A) étant convergentes à l'extérieur du tambour (appelons-les par convention « les clés »). Cela permet de déplacer radialement vers l'intérieur d'abord les voûtes, comme le montre la figure 2. Sur cette figure 2, sont représentés en traits pleins les segments 103 en position de travail du tambour 10, les segments A et B successifs constituant une surface continue cylindrique, et sont représentés en pointillés les mêmes segments A et B en position rétractée, l'enveloppe constituée par les surfaces des segments B étant de diamètre inférieur à celle constituée par les surfaces des segments A.

Ce tambour 10 ne possède donc qu'une seule position radiale de travail utilisée pour l'assemblage d'une carcasse de pneumatique, et une seule position rétractée pour l'extraction de la carcasse.

Le tambour 10 possède de plus une protubérance latérale 106 solidaire dudit tambour 10 et fixe sur ce dernier, présentant une surface d'appui 107 généralement cylindrique, de diamètre inférieur à celui de la surface de réception principale 101, de sorte que l'épaulement 102 reste dégagé pour permettre d'effectuer la pose du complexe-tringle sur ledit épaulement par une approche latérale.

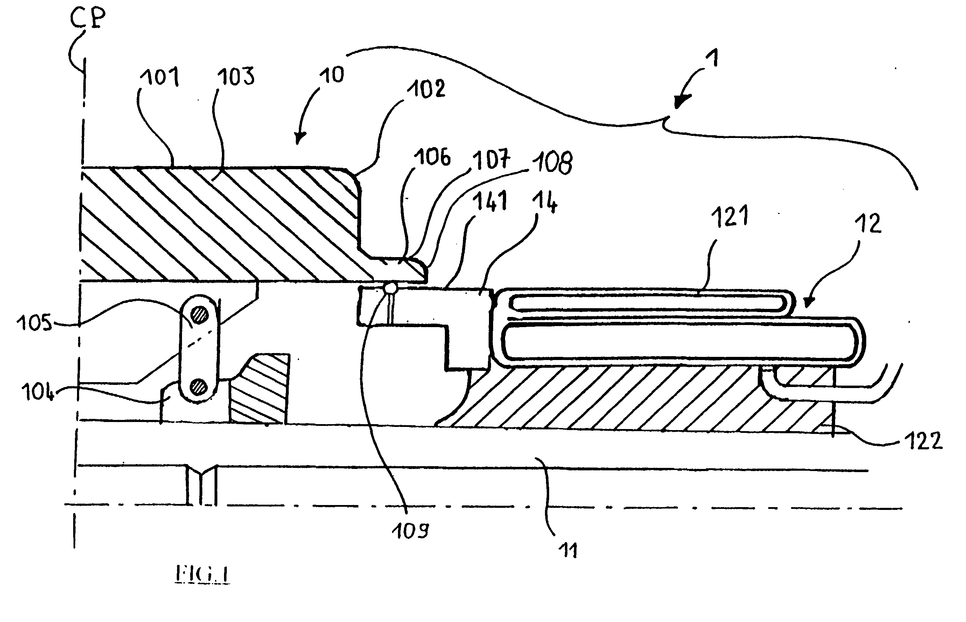

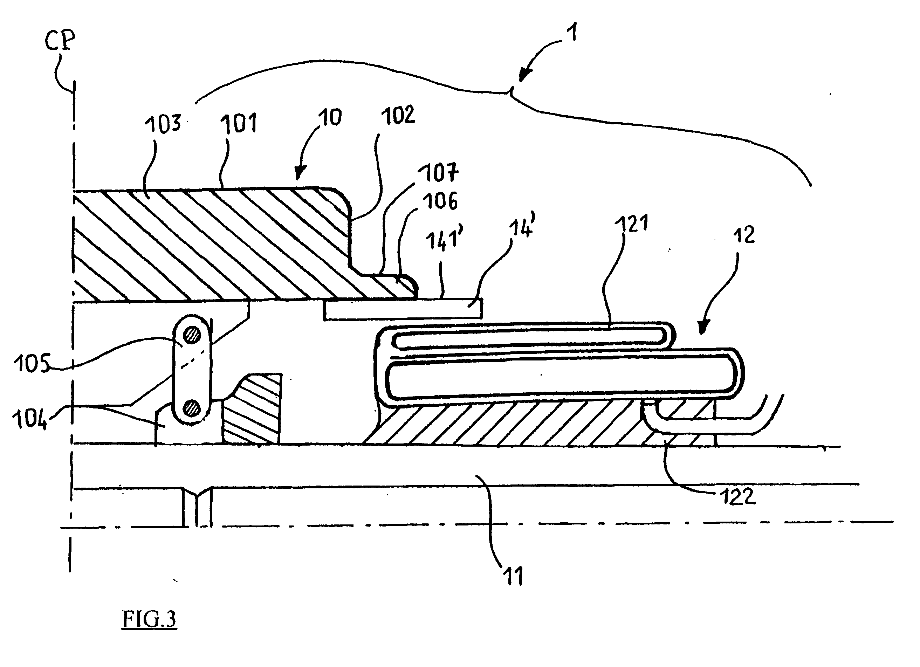

Notons que l'allure de la coupe radiale des segments 103, c'est à dire la forme de la surface extérieure constituée par la surface de réception principale 101 prolongée par les épaulements 102 peut varier quelque peu. Par exemple, elle peut être moins carrée aux épaulements, comme cela apparaît par exemple dans le brevet US 1 911 594. C'est à dire que les épaulements peuvent être quelque peu inclinés par rapport à la direction radiale, sans présenter de portion comprise dans un plan perpendiculaire à l'axe. Vus en section radiale, les épaulements sont alors assez penchés, tout en gardant des raccordements arrondis.
Comme le montrent les figures 1 et 3, l'appareillage 1 comporte également une couronne latérale 14 (14') coaxiale audit tambour 10, présentant une surface d'appui 141 (141') généralement cylindrique, de diamètre inférieur à celui de la protubérance latérale 106. Cette couronne latérale 14 (14') est montée sur l'arbre 11 et est mobile axialement par rapport au tambour 10, comme expliqué ci-après.

Selon la variante représentée à la figure 1, la couronne latérale 14 est montée sur le dispositif de retroussage 12 axialement intérieurement par rapport au centre de l'appareillage 1, et est solidaire en translation axiale dudit dispositif. Le diamètre de la surface d'appui 141 de la couronne latérale 14 est inférieur au diamètre intérieur des segments 103 dans leur position de travail afin de permettre son escamotage sous lesdits segments. Le déplacement axial du dispositif de retroussage 12 permet, en effet, d'actionner la couronne latérale 14 entre une position avancée transversalement, représentée sur la figure 1, où cette dernière dépasse axialement du tambour 10 et une position escamotée où la couronne latérale 14 est masquée par le tambour 10.

Selon une deuxième variante de réalisation de l'appareillage représentée sur la figure 3, la couronne latérale 14' est montée sur le tambour d'assemblage 10 radialement sous la protubérance latérale 106, et à translation axiale possible par rapport aux segments 103 entre une position avancée où elle dépasse axialement par rapport à la protubérance latérale 106 au-dessus du dispositif de retroussage 12 et une position escamotée sous la protubérance latérale 106. Cette disposition permet de moduler la longueur de la membrane utilisée effectivement pour un retroussage, la couronne latérale 14' étant susceptible, lors du mouvement de glissement axial, de recouvrir partiellement le dispositif de retroussage. En effet, lors d'une expansion des membranes de retroussage 121, la couronne latérale 14' étant en position avancée, les membranes n'agissent pas sur les produits posés sur la protubérance latérale 106 comme on le verra plus en détails dans la description du procédé de fabrication.

Notons que si l'on souhaite fabriquer un pneumatique ayant deux bourrelets de diamètres différents avec pour chaque bourrelet un retournement de l'armature de carcasse entre la tringle et l'armature elle-même, on peut prévoir un appareillage asymétrique par rapport au plan P de sorte que les couronnes, et respectivement les protubérances latérales, disposées de part et d'autre du plan P présentent des surfaces d'appui de diamètres différents, en respectant bien entendu pour chaque côté dudit plan, l'agencement relatif de la couronne et de la protubérance latérale décrit précédemment

Les différents moyens mis en oeuvre pour commander la rotation autour de l'axe de rotation des différents éléments de l'appareillage ne requièrent pas d'explications détaillées. Signalons simplement qu'il convient de commander en rotation non seulement le tambour 10, mais aussi de préférence le dispositif de retroussage 12 car il sert lui aussi de surface de pose de différents produits constitutifs du pneumatique à fabriquer. La commande en rotation du dispositif de retroussage 12 peut provenir directement de l'arbre 11, ou bien le dispositif de retroussage peut être embrayé à la demande sur le tambour 10, par exemple par une chambre tubulaire gonflable 109 insérée sur la surface d'appui 141, du côté axialement intérieur de celle-ci. L'embrayage du dispositif de retroussage 12 se fait alors par gonflage.

On décrira dans ce qui suit, pour ce premier mode de réalisation de l'invention, en référence aux figures 4A à 4J, le procédé de fabrication d'un pneumatique à armature de carcasse radiale de tourisme comprenant une armature de carcasse, au moins une tringle de renforcement dans chacun des bourrelets dudit pneumatique, et plus particulièrement la réalisation d'un de ces bourrelets dans lequel l'armature de carcasse forme un retournement disposé entre la tringle et l'armature de carcasse elle-même.

Bien entendu, le procédé de fabrication permet indifféremment la réalisation d'un pneumatique avec un seul bourrelet du type décrit ci-dessus ou deux bourrelets de ce type, et l'exemple choisi d'un pneumatique de tourisme à carcasse radiale ne saurait limiter l'invention à ce seul type de pneumatique.

Les figures 4A à 4J illustrent schématiquement ce procédé dans le premier mode de réalisation de l'invention selon la première variante de l'appareillage 1 représentée sur la figure 1, la mise en oeuvreoeuvre du procédé avec la deuxième variante de l'appareillage 1 se déduisant aisément de celui-ci.

Selon la figure 4A, le tambour 10 étant en position de travail et la couronne latérale 14 en position déployée, c'est à dire écartée axialement, on dépose sur la surface de réception principale 101 une nappe de caoutchouc appelée « nappe intérieure » NI, puis une nappe de câbles textiles, appelée « nappe carcasse » NC. L'ensemble de ces nappes NI et NC constitue ce que l'on appelle ici collectivement « armature de carcasse » A. L'extrémité A' de l'armature de carcasse A dépasse axialement de la surface de réception principale 101 et surplombe la protubérance latérale 106 et la couronne latérale 14, ainsi qu'une partie des membranes de retroussage.

On rabat ensuite l'extrémité A' de l'armature de carcasse A radialement vers l'intérieur, sur respectivement la surface d'appui 107 de la protubérance latérale 106, la surface d'appui 141 de la couronne latérale 14 et partiellement sur les membranes 121 à l'aide des doigts de rabattage 13, comme le montre la figure 4B.

Selon une variante, on peut également poser la nappe de carcasse en légère tension. La propension au retrait qui en résulte provoque spontanément une rétreinte diamétrale des extrémités A', que l'on peut compléter par un rabattage comme décrit ci-dessus ou un rouletage, pour appliquer correctement ladite armature de carcasse sur les surfaces de réception et d'appui.

On dépose ensuite, comme représenté sur la figure 4C, un profilé de mélange caoutchouteux P1 sur la zone de l'extrémité A' de l'armature de carcasse A disposée sur la surface d'appui 141 de la couronne latérale 14. Ce profilé P1 possède dans l'exemple décrit une section ayant la forme d'un quadrilatère mais on peut envisager d'autres formes de section. De façon avantageuse, on choisit pour réaliser le profilé P1 un mélange caoutchouteux ayant à une viscosité Mooney ML (1+4) à 100°C mesurée selon la norme ASTM:D-1646, supérieure ou égale à 70, afin que le profilé P1 soit suffisamment dur et la rotation de l'extrémité A' autour dudit profilé P1 s'en trouve facilitée.

On gonfle alors les membranes de retroussage qui relèvent radialement l'extrémité A' situé axialement extérieurement à la couronne latérale 14 et donc au profilé P1. Ainsi la zone de l'extrémité A' soulevée fait une rotation autour du profilé P1 de sorte à ce que cette dernière est orientée sensiblement radialement, comme le montrent les figures 4D et 4E. Notons au passage qu'au moins la portion des membranes 121 au contact avec l'armature de carcasse A est choisie et/ou traitée pour que l'armature de carcasse A ne colle pas sur ladite portion (par exemple parce que sa surface est recouverte d'un tissu textile approprié).

Conformément à la figure 4F, on dégonfle ensuite les membranes de retroussage 121, l'extrémité A' soulevée se maintenant dans sa position orientée sensiblement radialement, et on rapproche axialement, grâce au dispositif d'amenée de complexe-tringle, un complexe-tringle CT. Le complexe-tringle CT est constitué dans cet exemple par une tringle T de section carrée, faite de fils ou de câbles, surmontée radialement par un profilé de mélange caoutchouteux P2.

On rapproche axialement le complexe-tringle CT jusqu'à l'appui sur ce dernier de l'extrémité A'. On continue alors le rapprochement axial du complexe-tringle CT entraînant ainsi avec lui l'extrémité A' qui est retournée, et passant au-dessus du profilé P1 recouvert par une partie de l'extrémité A'. Le complexe-tringle CT est ainsi rapproché jusqu'à son contact avec l'épaulement 102 par l'intermédiaire de l'extrémité A' retournée, qui se retrouve ainsi entre la tringle T et l'armature de carcasse A, comme on le voit sur la figure 4G.

Le dépôt du complexe-tringle CT sur le retournement de l'extrémité A' de l'armature de carcasse A est ainsi effectué à l'aplomb de la deuxième surface d'appui cylindrique 107 coaxiale, disposée entre la surface de réception principale 101 et la première surface d'appui 141 (ou 141'), le diamètre de la surface de réception principale 101 étant supérieur à celui de la deuxième surface d'appui, lui-même supérieur au diamètre de la première surface d'appui (voir aussi 741, 711, 751 ci-dessous).

La couronne latérale 14 est ensuite déplacée axialement vers le centre (plan CP), ce qui escamote sous la protubérance latérale 106 la première surface d'appui 141 (141' dans la variante illustrée à la figure 3), de sorte que le profilé P1 entouré de l'armature de carcasse A est désormais juste par-dessus les membranes de retroussage 121 (figure 4H).

On gonfle une nouvelle fois les membranes de retroussage 121 qui réalisent cette fois un basculement du profilé P1 (figure 4I) contre le complexe-tringle, ou au moins qui le relèvent radialement quelque peu par rapport au complexe-tringle CT et aident à le plaquer latéralement contre le complexe-tringle CT.

Cette étape étant réalisée, on dégonfle les membranes de retroussage 121. Le bourrelet cru de la carcasse garde sa forme (figure 4J).

On pose ensuite les autres produits constitutifs du pneumatique et on procède à la vulcanisation de ce dernier. L'invention ne concerne pas cette partie de la fabrication. De nombreuses méthodes sont disponibles à l'homme du métier, c'est pourquoi il est inutile d'aborder cet aspect de la fabrication dans le contexte de la présente invention.

Dans ce qui suit on utilisera des références identiques pour les constituants communs d'une carcasse de pneumatique réalisée par l'un quelconque des appareillages conformes à l'invention.

On peut également envisager de réaliser le procédé selon l'invention avec des appareillages comportant des tambours expansibles radialement par rapport à une première position de travail et possédant des épaulements afin de permettre l'utilisation de complexes-tringle déposés sur lesdits épaulements.

De tels appareillages sont représentés sur les figures 5, 6 et 7. On désignera respectivement ces appareillages par des références débutant par 5, 6 et 7.

Les appareillages 5, 6, 7 comprennent respectivement un tambour d'assemblage 50, 60, 70, expansible radialement, comprend un corps central 51, 61, 71 monté sur un arbre 52, 62, 72, présentant une surface de réception 511, 611, 711 des produits à assembler et des épaulements 514, 614, 714.

Ces appareillages 5, 6, 7 comprennent également un système d'amenée des complexes-tringle, non représenté, translatable axialement vers le tambour 50, 60, 70 en laissant libre le diamètre intérieur des complexes-tringle comme décrit pour l'exemple précédent. Mais, contrairement à l'exemple précédent, les appareillages 5, 6, 7 sont ici utilisés sans doigts de rabattage, comme on le comprendra à la lecture du procédé de fabrication mettant en oeuvre ces appareillages.

Les tambours 50, 60, 70 décrits dans cet exemple de réalisation de l'invention étant symétriques par rapport à un plan P représenté sur les figures 5, 6, 7, on ne décrira dans la suite de la description que les demi-tambours situés à droite du plan P sur lesdites figures. Le choix des tambours décrits ici ne limite pas la portée de l'invention à des tambours symétriques.

Le corps central 51 (61, 71) comprend un demi-corps 512 (612, 712) déplaçable axialement autour de l'arbre 52 (62, 72) afin de régler l'écartement des tringles du pneumatique à réaliser, et une couronne centrale 513 (613, 713) fixe axialement par rapport à l'arbre 52 (62, 72).

Le demi-corps 512 (612, 712) et la couronne centrale 513 (613, 713) sont constitués par une pluralité de segments latéraux 522 (622, 722) et centraux 523 (623, 723) respectivement en vis-à-vis. Les segments latéraux 522 (622, 722) sont juxtaposés circonférentiellement autour de l'arbre 52 (62, 72) et, de même, les segments centraux 523 (623, 723) sont juxtaposés circonférentiellement autour de l'arbre 52 (62, 72). Pour assurer la liaison des différents éléments du corps 51 (61, 71), chaque segment latéral 522 (622, 722) est guidé par rapport au segment central 523 (623, 723) en vis-à-vis au moyen d'une tige 515 (615, 715) dont une extrémité traverse le segment central 523 (623, 723) et dont l'autre extrémité est montée à coulissement dans un alésage 516 (616, 716) porté par le segment latéral 522 (622, 722) en vis-à-vis.

Afin de permettre au tambour 50 (60, 70) d'atteindre sa position expansée, les segments 522 (622, 722) sont mobiles radialement sous l'action d'une chambre d'expansion gonflable 517 (617, 717) disposée sous lesdits segments latéraux 522 (622, 722). Les segments latéraux 522 (622, 722) entraînent dans leur mouvement radial les segments centraux 523 (623, 723) de la couronne centrale 513 (613, 713), qui sont solidaires en déplacement radial des segments latéraux 522 (622, 722) par l'intermédiaire des tiges 515 (615, 715).

Des plaquettes 518 (618, 718) sont fixées par des vis sur les segments 523 (623, 723) de la couronne centrale 513 (613, 713). Ces plaquettes 518 (618, 718) recouvrent au moins partiellement les segments 522 (622, 722) du demi-corps 512 (612, 712) afin d'assurer une continuité entre la couronne centrale 513 (613, 713) et ledit demi-corps 512 (612, 712) pour les produits à assembler quelle que soit la position axiale du demi-corps 512 (612, 712). La couronne centrale 513 (613, 713) permet, de plus, d'assurer un maintien axial des plaquettes 518 (618, 718) lors de l'expansion radial du tambour 50 (60, 70). Bien entendu, on peut envisager d'autres éléments que les chambres d'expansion afin de réaliser une expansion radiale du tambour.

La surface de réception 511 (611, 711) des produits à assembler est ainsi constituée par l'ensemble des surfaces extérieures des plaquettes 518 (618, 718) et des zones des segments 522 (622, 722) non recouvertes par lesdites plaquettes 518 (618, 718).

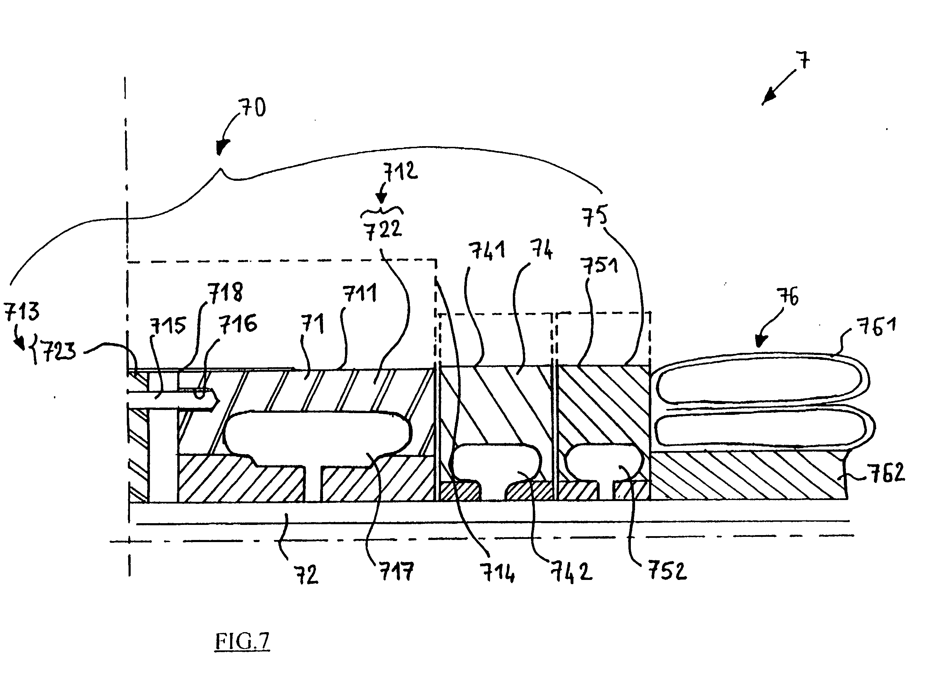

On décrira plus précisément dans ce qui suit dans un premier temps les éléments communs aux appareillages 5 et 6 en référence aux figures 5 et 6 puis leurs caractéristiques spécifiques, et dans un deuxième temps l'appareillage 7 en référence à la figure 7.

Le tambour 50 (60) comporte une protubérance latérale 54 (64) expansible radialement, solidaire du corps 51 (61) et présentant une surface d'appui 541 (641) des produits à assembler. La protubérance latérale 54 (64) est juxtaposée coaxialement à l'épaulement 514 (614) du corps 51 (61) et forme une surface d'appui 541 (641) de diamètre inférieur à celui de ladite surface de réception principale 511 (611) .). Une réalisation possible de la protubérance latérale 54 (64) consiste à la former sous forme de segments venant respectivement en prolongement des segments 522 (622) du demi-corps 512 (612). On peut également, sans sortir du cadre de l'invention, envisager que la protubérance latérale 54 (64) soit un élément rapporté par rapport au corps 51 (61).

L'appareillage 5 (6) comporte un dispositif de retroussage 55 (65) monté sur l'arbre 52 (62) axialement extérieurement à la protubérance latérale 54 (64). Ce dispositif de retroussage 55 (65) peut être constitué, comme dans l'exemple de l'appareillage 1, par des membranes de retroussage. On a choisi pour cet exemple un dispositif de retroussage 55 (65) comprenant des doigts de relevage ; on entend par le terme « doigt » un profilé de faible section.

Sur les figures 5 et 6, le dispositif de retroussage 55 (65) est indépendant du tambour 50 (60) et peut être translaté axialement, cependant on peut également envisager que ce dispositif soit solidaire du tambour 50 (60) auquel cas il est intéressant d'utiliser les segments 522 (622) du demi-corps (512, 612) comme supports respectifs des doigts de relevage.

Le dispositif de retroussage 55 (65) comporte donc une pluralité de doigts de relevage 551 (651), de section rectangulaire (si vus radialement), répartis circulairement autour de l'arbre 52 (62) et s'étendant dans des directions radiales.

Ces doigts de relevage 551 (651) sont disposés axialement extérieurement par rapport au centre du tambour 50 (60), à une faible distance de l'extrémité libre de la protubérance latérale 54 (64), et présentent respectivement une surface de contact 552 (652) des produits à assembler. Les doigts de relevage 551 (651) sont montés à déplacement radial possible respectivement sur un support cylindrique 553 (653) monté à translation axiale sur l'arbre 52 (62) par l'intermédiaire de vérins 554 (654).

En effet, l'extrémité radialement intérieure au corps 51 de chaque doigt de relevage 551 (651) porte un prolongement 558 (658) axial sur lequel est fixé, par l'intermédiaire de vis, le vérin 554 (654) correspondant qui coulisse radialement dans un logement 555 (655) portée par le support cylindrique 553 (653).

Ainsi, les doigts de relevage 551 (651) sont déployables radialement vers l'extérieur du tambour 50 (60) à partir d'une position de repos vers une position déployée. Et, afin d'assurer le retour en position de repos des doigts de relevage 551 (651), une ceinture élastique de rappel 559 (659) entoure l'ensemble des prolongements axiaux 558 (658).

Ces doigts de relevage 551 (651) offrent ainsi aux produits à assembler une pluralité de surfaces de contact 552 (652) discontinues et réparties circonférentiellement.

Avantageusement, les extrémités libres des doigts de relevage 551 (651), c'est-à-dire radialement extérieures au tambour 50 (60), sont constituées par un galet 557 (657) monté libre en rotation autour d'un axe et qui porte ainsi la surface de contact 552 (652). Ce galet 557 (657) permet d'éviter de créer des tensions au niveau des produits soulevés lors du déploiement des doigts de relevage 551 (651) en assurant, dans cette phase, un contact « roulant » entre les doigts et les produits.

Selon la figure 5, le tambour 50 porte des moyens d'expansion 57, qui comprennent notamment les chambres d'expansion 517, vers deux positions expansées distinctes et qui permettent d'atteindre ses deux positions successivement. De la sorte, le tambour peut prendre trois positions stables distinctes, caractérisées par trois développements circonférentiels différents que présenterait une corde enroulée autour de la surface de réception principale.

Différentes solutions peuvent être envisagées afin de réaliser ces deux expansions successives du tambour 50. Dans l'exemple choisi, les moyens d'expansion 57 comprennent un anneau 572 de commande monté sur un anneau support 573, les deux anneaux étant montés sur l'arbre 52 et disposés axialement extérieurement au corps 51 à proximité de l'extrémité libre de la protubérance latérale 54. Aux fins d'une plus grande compacité, l'anneau support 573 porte un épaulement cylindrique intérieur 573' qui coopère avec l'anneau de commande 572.

L'anneau de commande 572 est monté de façon rotative par rapport au corps 51 du tambour 50, l'anneau support 573 étant solidaire en rotation dudit corps 51.

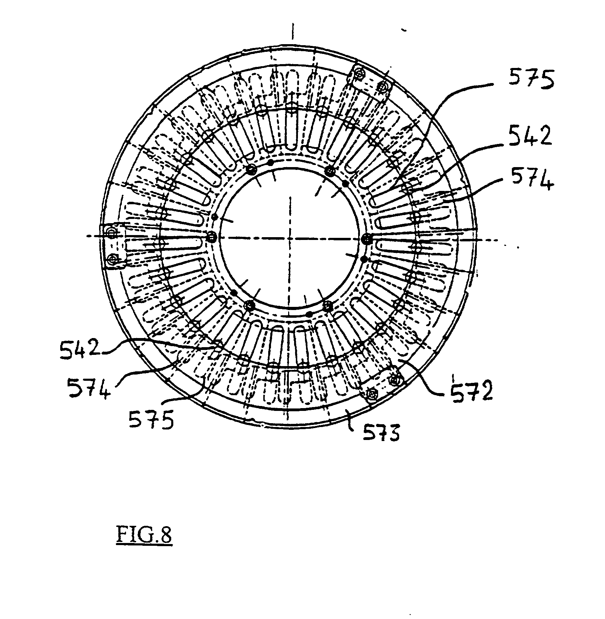

Comme le montrent les figures 5 et 8, la protubérance latérale 54 porte au moins un pion d'engagement 542 dans une came 574 portée par l'anneau de commande 572 et, simultanément, dans une lumière 575 orientée dans une direction radiale et portée par l'anneau support 573. Dans l'exemple choisi, chacun des segments constituant la protubérance latérale 54 porte un pion d'engagement dans une came et une lumière correspondante.

La position expansée accessible au tambour 51 est tributaire de la position angulaire de l'anneau de commande 572. En effet, en fonction de la rotation de l'anneau de commande 572 et donc de sa position angulaire et de celle des cames 574, les pions d'engagement 542 ont une plage de positionnement radial différente, ce qui limite donc l'expansion radiale du tambour 50, les lumières 575 assurant le guidage radialement des pions d'engagement 542.

La rotation angulaire de l'anneau de commande 572 est obtenue par l'utilisation d'un vérin d'actionnement non représenté. Selon la figure 8, chaque came 574 présente une forme ressemblant à un Z, les positions possibles du pion d'engagement 542 correspondant dans chaque côté du Z correspondant aux trois positions du tambour 50, c'est-à-dire une position rétractée, une position expansée intermédiaire et une position expansée maximale.

Sans sortir du cadre de l'invention, on peut envisager des éléments autres que les chambres d'expansion 517 afin de réaliser une expansion radiale du tambour 50. Le système d'assujettissement du positionnement radial du tambour 50 au positionnement circonférentiel de l'anneau de commande 572 n'est pas lié au choix de chambres d'expansion 517.

On peut envisager d'utiliser un seul ensemble anneau de commande - anneau support. Cependant, on préférera en utiliser deux, un à chaque extrémité du corps du tambour afin d'assurer un bon synchronisme d'expansion entre les deux extrémités du tambour.

Comme on le comprendra mieux à la lecture du fonctionnement de cet appareillage 5, le dispositif de retroussage 55 est réalisé de sorte que les surfaces de contact 552 des doigts de relevage 551 constituent sensiblement une surface cylindrique coaxiale à l'arbre 52 dont le diamètre est :
- en position de repos desdits doigts, inférieur ou égal au diamètre de la surface d'appui 541 de la protubérance latérale 54 dans la position expansée intermédiaire du tambour 50,
- et en position déployée, supérieur au diamètre de la surface d'appui 541 de la protubérance latérale 54 dans la position expansée intermédiaire du tambour 50.

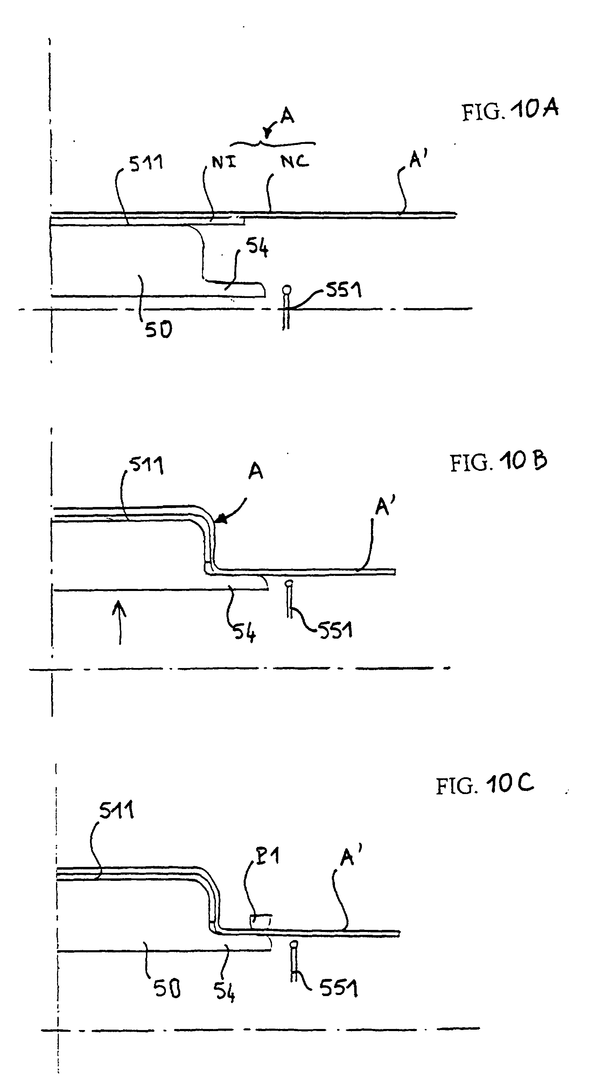

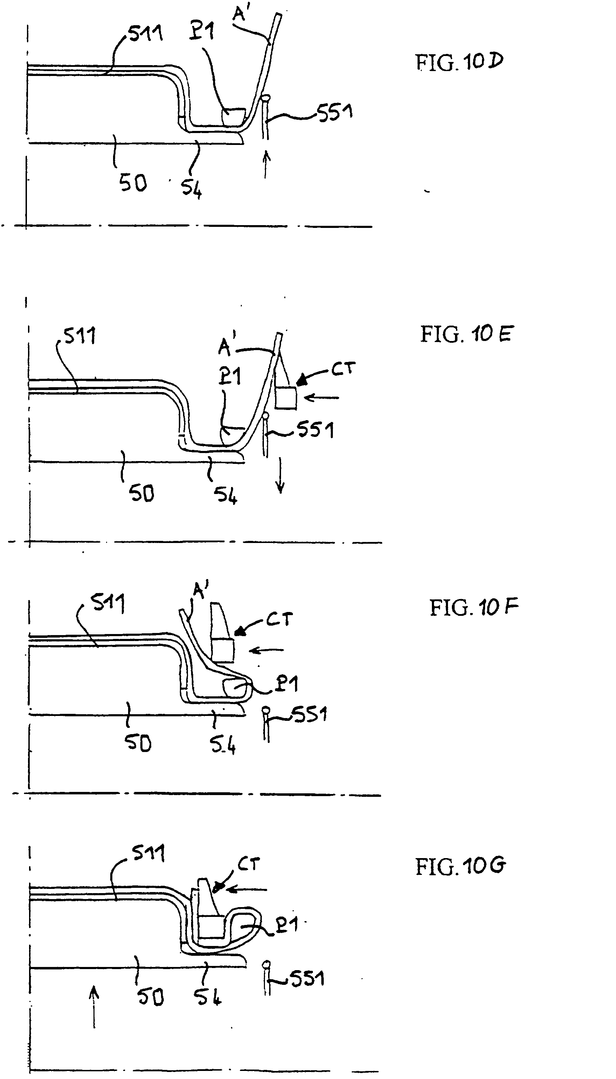

Les figures 10A à 10G illustrent schématiquement ce procédé dans le deuxième mode de réalisation de l'invention utilisant l'appareillage 5.

Selon la figure 10A, le tambour 50 étant en position contractée, on dépose sur la surface de réception 511 les nappes NI et NC constituant l'armature de carcasse A. L'extrémité A' de l'armature de carcasse dépasse axialement de la surface de réception 511 et couvre la protubérance latérale 54 ainsi que les doigts de relevage 551 du dispositif de retroussage 55.

Selon la figure 10B, on rabat ensuite l'extrémité A' de l'armature de carcasse A sur respectivement la surface d'appui 541 de la protubérance latérale 54 en réalisant une première expansion du tambour 50 grâce aux anneaux de commande 572 et support 573. L'expansion du tambour 50 en position intermédiaire permet de plaquer l'extrémité A' sur la surface d'appui 541 et celle constituée par les surfaces de contact 552 du dispositif de retroussage 55.

On dépose ensuite, comme représenté sur la figure 10C, le profilé de mélange caoutchouteux P1 sur la zone de l'extrémité A' de l'armature de carcasse A disposée sur la surface d'appui 541 de la protubérance latérale 54.

On déploie alors radialement les doigts de relevage 551 jusqu'à la position déployée dans laquelle les surfaces de contact 552 constituent sensiblement une surface cylindrique de diamètre supérieur au diamètre de la surface d'appui 541 de sorte que les doigts 551 relèvent radialement l'extrémité A' située axialement extérieurement à la protubérance latérale 54 et donc au profilé P1. Ainsi la zone de l'extrémité A' soulevée fait une rotation autour du profilé P1 de sorte à ce que cette dernière est orientée sensiblement radialement, comme le montre la figure 10D.

Conformément à la figure 10E, les doigts de relevage 551 étant toujours en position déployée, on rapproche axialement, grâce au dispositif d'amenée de complexe-tringle, le complexe-tringle CT jusqu'à l'appui sur ce dernier de l'extrémité A'.

On peut rappeler en position de repos les doigts de relevage 551 grâce à la ceinture élastique 559 et on continue le rapprochement axial du complexe-tringle CT entraînant ainsi avec lui l'extrémité A' qui est retournée, et passant au-dessus du profilé P1 recouvert par une partie de l'extrémité A', comme on le voit sur la figure 10F. On notera cependant que l'on peut également rappeler les doigts 551 avant l'appui de l'extrémité A' sur le complexe-tringle.

On actionne alors, simultanément à l'avance du complexe-tringle CT, l'anneau de commande 572 afin d'amener le tambour 50 dans sa position expansée maximale. L'expansion radiale de la surface d'appui 541 qui en résulte relève radialement le profilé P1 par rapport au complexe-tringle CT (voir figure 10G).

Quant à l'appareillage 6, il comporte en plus des éléments déjà décrits (à savoir le tambour 60, l'arbre 62, la protubérance latérale 64 solidaire du tambour 60 et le dispositif de retroussage 65) une virole 66 mobile axialement, par exemple montée sur l'arbre 62.

Cette virole 66 possède un diamètre sensiblement identique à celui de la surface de réception 611 et est montée, de façon translatable par rapport à l'arbre 62, entre une position escamotée et une position de recouvrement de la surface 641 de la protubérance latérale 64 dans laquelle la virole 66 recouvre ladite surface 641 comme le montre la figure 6. Comme on le verra plus précisément dans la description du fonctionnement de l'appareillage 6, la présence de la virole 66 assure un support ferme pour la pose d'un profilé de mélange caoutchouteux.

La virole 66 est portée par un support 67 monté sur l'arbre 62. Le support 67 comporte un anneau extérieur 671, concentrique à l'arbre 62 et qui recouvre la virole 66 dans la position escamotée de cette dernière. Le diamètre de l'anneau extérieur 671 est choisi le plus proche possible de celui de la virole 66, afin de permettre le passage du complexe-tringle au-dessus de l'anneau extérieur. Le support 67 est monté déplaçable axialement sur l'arbre 62 afin notamment, de faciliter des opérations de démontage ou d'accès au tambour 60.

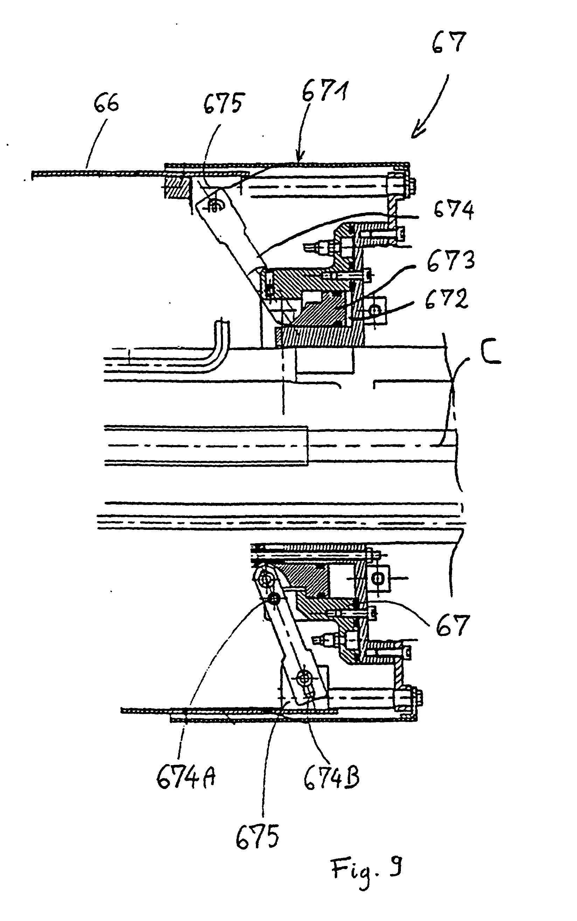

A son extrémité latérale orientée à l'opposé du tambour 60, le support 67 porte une chambre annulaire 672 concentrique à l'arbre 62 à l'intérieur de laquelle coulisse axialement un piston 673 d'actionnement de la virole 66, relié à cette dernière par une bielle 674, montée rotative autour de l'axe 674A, lui-même monté sur le support 67. La liaison de la bielle 674 avec la virole 66 est réalisée par le montage d'un axe solidaire d'un palier 675, ledit axe pénétrant dans un orifice allongé 674B aménagé à une des extrémités de la bielle 674. Le palier 675 est par ailleurs coulissant par rapport à l'anneau extérieur 671, ce qui assure le guidage en translation de la virole 66. L'autre extrémité de la bielle 674 coopère avec le piston 673 qui assure la commande du basculement de la bielle (par exemple par un galet engagé dans une came solidaire du piston 673). Le lecteur est invité à consulter la figure 9 qui montre, dans sa partie supérieure, la virole dans la même position que celle occupée à la figure 6, et qui montre, dans sa partie inférieure, la bielle 674 basculée et la virole 66 escamotée sous l'anneau extérieur 671.

Le tambour 60 ne possède dans cet exemple que deux positions de travail : une position rétractée correspondant à la position dégonflée de la chambre d'expansion vessies de gonflage 617 et une position expansée à la position gonflée de la chambre d'expansion 617. Notons cependant que dans une réalisation asymétrique de l'appareillage aux fins de réaliser un pneumatique avec deux bourrelets de diamètres différents et par conséquent un appareillage avec deux couronnes solidaires du tambour de diamètres différents, il est utile de prévoir sur le tambour un dispositif d'expansion permettant d'atteindre deux positions d'expansion successives permettant de gérer lors de la fabrication cette différence de diamètre.

Dans cette réalisation on préfère utiliser un dispositif de retroussage utilisant des doigts de relevage 651, décrits précédemment, aux membranes de retroussage. En effet, comme le montrera plus en détails la description du procédé, le dispositif de retroussage doit être capable d'un déplacement radial important, ce qui est plus aisément réalisable avec des doigts de relevage.

Ce dispositif de retroussage 65 est réalisé de sorte que les surfaces de contact 652 des doigts de relevage 651 constituent sensiblement une surface cylindrique coaxiale à l'arbre 62 dont le diamètre est :
- en position de repos desdits doigts, inférieur à celui de surface de réception 611 en position contractée du tambour 61 afin de permettre le déploiement de la virole 66,
- et en position avancée, supérieur à celui de la surface de réception 611 en position contractée du tambour 61.

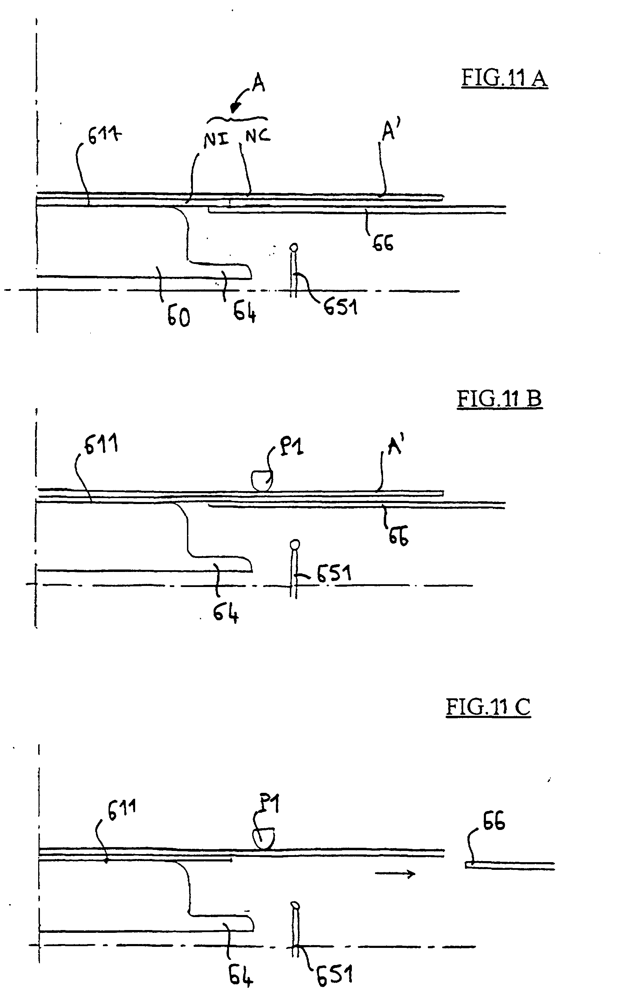

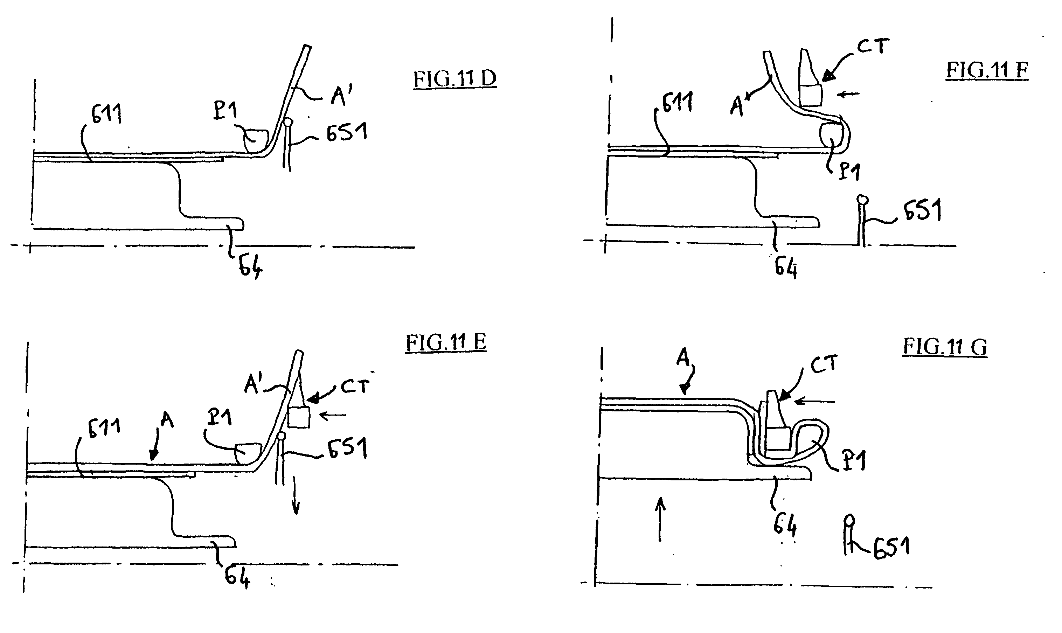

Les figures 11A à 11G illustrent schématiquement ce procédé dans le troisième mode de réalisation de l'invention utilisant l'appareillage 6.

Selon la figure 11A, le tambour 60 étant en position contractée et la virole 66 en position avancée transversalement et recouvrant la protubérance latérale 64, on dépose sur la surface de réception 611 les nappes NI et NC constituant l'armature de carcasse A, l'extrémité A' de l'armature de carcasse A reposant sur la virole 66. A ce stade, la virole 66 n'est pas indispensable pour la pose de l'armature de carcasse A comme l'ont montré les exemples précédents.

Selon la figure 11B, on dépose ensuite le profilé de mélange caoutchouteux P1 sur la zone de l'extrémité A' de l'armature de carcasse A disposée sur la virole 66. C'est pour cette dépose qu'il est très favorable d'avoir un support sous l'extrémité A' de l'armature de carcasse A.

Ensuite on escamote la virole 66 sous l'anneau extérieur 67, l'extrémité A' portant le profilé P1 se maintenant seule en position comme le montre la figure 11 C.

Puis on déploie radialement les doigts de relevage 651 qui relèvent radialement l'extrémité A' située axialement extérieurement à la protubérance latérale 64 et donc au profilé P1. Ainsi la zone de l'extrémité A' soulevée fait une rotation autour du profilé P1 de sorte que cette dernière soit orientée sensiblement radialement, comme le montre la figure 11D.

Conformément à la figure 11E, les doigts de relevage 651 étant toujours en position déployée, on rapproche axialement, grâce au dispositif d'amenée de complexe-tringle, le complexe-tringle CT jusqu'à l'appui sur ce dernier de l'extrémité A'.

On peut rappeler en position de repos les doigts de relevage 651 grâce à la ceinture élastique 659 et on continue alors le rapprochement axial du complexe-tringle CT qui entraîne ainsi avec lui l'extrémité A' qui est ainsi retournée, et passe au-dessus du profilé P1 recouvert par une partie de l'extrémité A', comme on le voit sur la figure 11F.

On synchronise alors le rapprochement axial du complexe-tringle CT et le gonflage de la chambre d'expansion 617 afin d'amener le tambour 60 dans sa position expansée maximale, ce qui relève radialement la deuxième surface d'appui 641 et expanse le profilé P1 par rapport au complexe-tringle CT (voir figure 11G).

On décrira enfin dans ce qui suit les caractéristiques spécifiques relatives à l'appareillage 7 en référence à la figure 7, le corps central 71 du tambour 70 ayant déjà été décrit précédemment.

Le tambour 70 comporte également une première couronne et une couronne intermédiaire, montées sur l'arbre 72, respectivement 75 et 74, la couronne intermédiaire 74 étant disposée entre l'un des épaulements 714 du corps 71 (apparaissant nettement en position expansée dudit corps central 71) et la première couronne 75. Chacune des première couronne 75 et couronne intermédiaire 74, possède une surface d'appui des produits à assembler, que l'on nommera en référence aux couronnes première surface d'appui 751 pour la première couronne et deuxième surface d'appui 741 pour la couronne intermédiaire 74.

Les deux couronnes 74, 75 sont solidaires en translation axiale du corps central 71 et expansibles radialement individuellement et indépendamment dudit corps, grâce à une chambre d'expansion respectivement 742 et 752. On peut envisager d'utiliser d'autres moyens d'expansion que les chambres citées ci-dessus.

Les diamètres extérieurs de la première couronne et de la couronne intermédiaire 75, 74 c'est-à-dire les diamètres des première et deuxième surfaces d'appui 751, 741 en position rétractée des couronnes 75, 74 sont sensiblement identiques au diamètre de la surface de réception 711 en position rétractée du corps central 71, et le diamètre de la première surface d'appui 751 en position expansée de la couronne 75 est inférieur au diamètre de la deuxième surface d'appui 741 également en position expansée de la couronne intermédiaire 74, qui est lui-même inférieur au diamètre de la surface de réception 711 en position expansée du corps central 71.

Notons que dans une réalisation asymétrique de l'appareillage 7 aux fins de réaliser un pneumatique avec deux bourrelets de diamètres différents, les diamètres extérieurs de la première couronne et de la couronne intermédiaire seront différents à droite et à gauche du plan P.

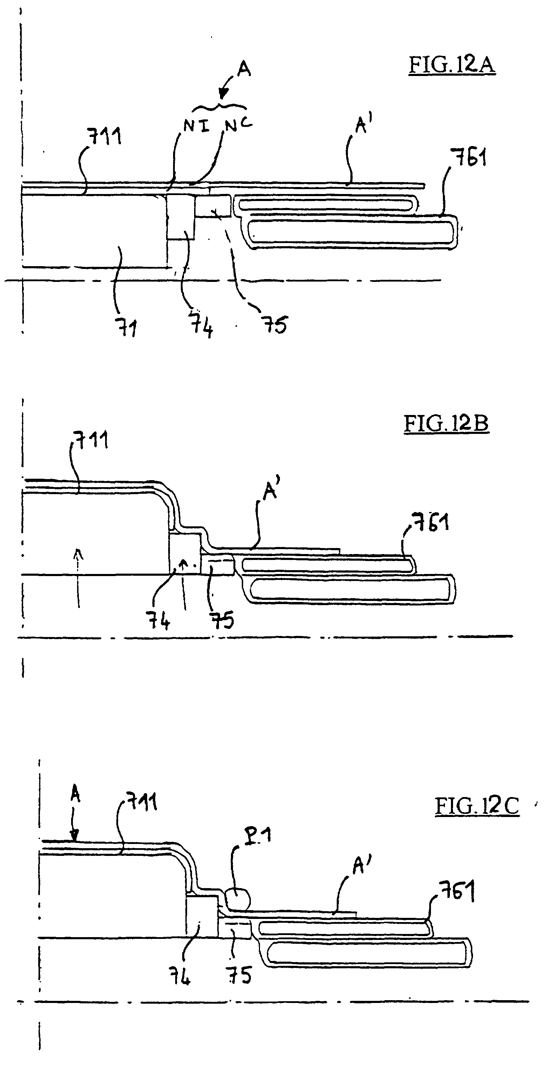

L'appareillage 7 comporte un dispositif de retroussage 76 monté sur l'arbre 72 axialement extérieurement à la première couronne 75. Ce dispositif de retroussage 76 peut être constitué, comme dans les exemples précédents, par des membranes de retroussage ou des doigts de relevage. On a choisi pour cet exemple des membranes de retroussage 761 portées par un support 762 monté à translation axiale sur l'arbre 72. Les figures 12A à 12F illustrent schématiquement ce procédé dans le quatrième mode de réalisation de l'invention utilisant l'appareillage 7.

Selon la figure 12A, le corps central 71 et les deux couronnes 75 et 74 étant respectivement en position rétractée, on dépose sur la surface de réception 711 les nappes NI et NC constituant l'armature de carcasse A, l'extrémité A' de l'armature de carcasse A reposant sur la première et la deuxième surfaces d'appui 751 et 741 des couronnes 75, 74 et dépassant axialement extérieurement de ces dernières.

Selon la figure 12B, on réalise l'expansion successivement du corps central 71 et de la couronne intermédiaire 74 de sorte que l'on crée pour l'armature de carcasse A deux « marches d'escalier » sur lesquelles elle est appliquée.

On dépose ensuite le profilé de mélange caoutchouteux P1 sur la zone de l'extrémité A' de l'armature de carcasse A disposée sur la première surface d'appui 751, comme le montre la figure 12C.

Puis on déploie radialement les membranes de retroussage 761 qui relèvent radialement l'extrémité A' située axialement extérieurement à la première couronne 75 et donc au profilé P1. Ainsi la zone de l'extrémité A' soulevée fait une rotation autour du profilé P1 de sorte que cette dernière soit orientée sensiblement radialement, comme le montre la figure 12D.

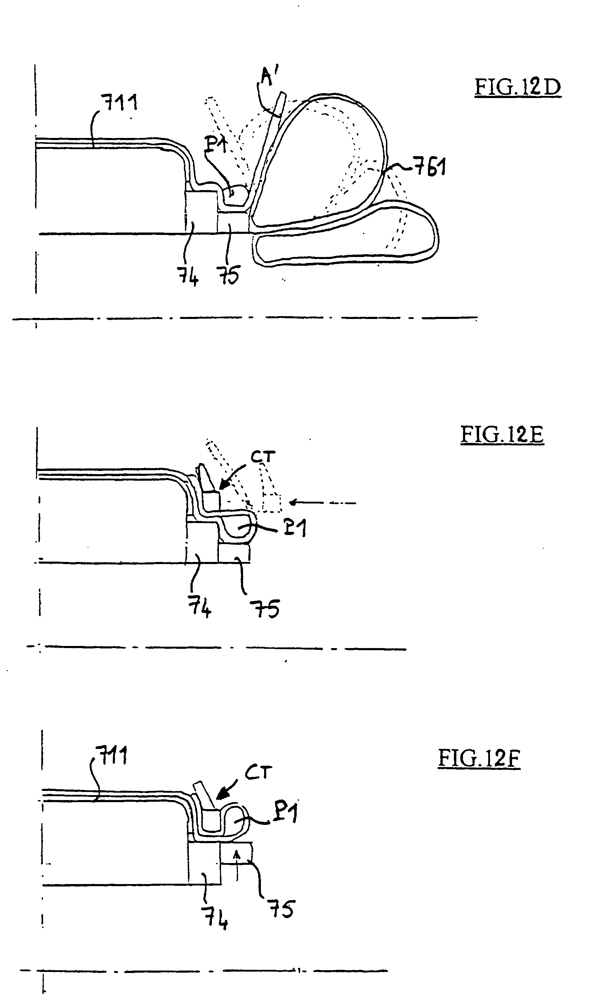

On dégonfle alors les membranes de retroussage 761 et, grâce au dispositif d'amenée de complexe-tringle, on rapproche axialement le complexe-tringle CT jusqu'à l'appui de l'extrémité A' sur ce dernier. On continue alors le rapprochement axial du complexe-tringle CT entraînant ainsi avec lui l'extrémité A' qui est retournée, et passant au-dessus du profilé P1 recouvert par une partie de l'extrémité A'. Le complexe-tringle CT est ainsi rapproché jusqu'à son contact avec l'épaulement 714 par l'intermédiaire de l'extrémité A' retournée, qui se retrouve ainsi entre la tringle T et l'armature de carcasse A, comme on le voit sur la figure 12E.

On gonfle alors la chambre d'expansion 752 afin d'amener la première surface d'appui 751 portant le profilé P1 au même diamètre que celui de la deuxième surface d'appui 741 portant le complexe-tringle CT, ce qui relève radialement le profilé P1 par rapport au complexe-tringle CT (voir figure 12F).

## Revendications

1. Procédé de fabrication d'un pneumatique, comportant les étapes suivantes
- déposer une armature de carcasse (A) sur une surface de réception principale généralement cylindrique (101, 511, 611, 711), l'une au moins des extrémités latérales (A') de l'armature de carcasse (A) étant déposée à l'aplomb d'une première surface d'appui (141, 141', 541, 66, 751) cylindrique, coaxiale à la surface de réception principale (101, 511, 611, 711),
- appliquer l'extrémité (A') de l'armature de carcasse (A) sur la première surface d'appui (141, 141', 541, 66, 751),
- déposer un profilé de mélange caoutchouteux (P1) sur cette extrémité (A') de l'armature de carcasse (A),
- retourner ladite extrémité latérale (A') autour du profilé de mélange caoutchouteux (P1) tout en maintenant ledit profilé substantiellement immobile,
- déposer un complexe-tringle (CT) sur le retournement ainsi réalisé et axialement à l'intérieur de l'endroit de dépose du profilé.

2. Procédé selon la revendication 1, dans lequel l'autre des extrémités latérales de l'armature de carcasse (A) est également déposée à l'aplomb d'une première surface d'appui cylindrique, disposée axialement de l'autre côté, également coaxiale à la surface de réception principale (101, 511, 611, 711).

3. Procédé selon la revendication 1, comportant une étape consistant à rabattre ladite extrémité latérale (A') de l'armature de carcasse (A) radialement vers l'intérieur.

4. Procédé selon la revendication 1, dans lequel le retournement de l'extrémité (A') de l'armature de carcasse (A) autour du profilé de mélange caoutchouteux (P1) est réalisé :
- en relevant radialement ladite extrémité (A') de sorte qu'elle soit orientée sensiblement radialement,
- puis en rapprochant axialement le complexe-tringle (CT) vers le centre de l'armature de carcasse (A) jusqu'à l'appui de l'extrémité (A') sur le complexe-tringle (CT),
- et en poursuivant le rapprochement axial du complexe-tringle (CT) qui passe au-dessus du profilé de mélange caoutchouteux (P1).

5. Procédé selon la revendication 4, dans lequel on relève radialement l'extrémité (A') de l'armature de carcasse (A) en appuyant radialement vers l'extérieur dans une zone de ladite extrémité (A') située axialement extérieurement au profilé de mélange caoutchouteux (P1).

6. Procédé selon l'une quelconque des revendications 1 à 5, dans lequel la première surface d'appui (141, 141', 541, 751) est positionnée à un diamètre inférieur à la surface de réception principale (101, 511, 711) lors de la dépose du profilé de mélange caoutchouteux (P1) sur l'extrémité de l'armature de carcasse.

7. Procédé selon la revendication 6, dans lequel le dépôt du complexe-tringle (CT) sur le retournement de l'extrémité (A') de l'armature de carcasse (A) est effectué à l'aplomb d'une deuxième surface d'appui cylindrique (107, 741) coaxiale, disposée entre la surface de réception principale (101, 711) et la première surface d'appui (141, 141', 751), le diamètre de la surface de réception principale (101. 711) étant supérieur à celui de la deuxième surface d'appui (107, 741), lui-même supérieur au diamètre de la première surface d'appui (141, 141', 751).

8. Procédé selon la revendication 6, complété par l'étape subséquente suivante :
- dilater radialement le profilé de mélange caoutchouteux (P1) recouvert par le retournement de l'armature de carcasse (A) par rapport au complexe-tringle (CT) en escamotant la première surface d'appui (141, 141') et en actionnant un dispositif de retroussage (12) disposé sous le profilé de mélange caoutchouteux (P1) recouvert par le retournement de l'armature de carcasse (A).

9. Procédé selon la revendication 7, complété par l'étape subséquente suivante :
- dilater radialement le profilé de mélange caoutchouteux (P1) recouvert par le retournement de l'armature de carcasse (A) par rapport au complexe-tringle (CT) en effectuant une expansion de la première surface d'appui (751) jusqu'au diamètre de la deuxième surface d'appui (741).

10. Procédé selon la revendication 6, complété par l'étape subséquente suivante :
- dilater radialement le profilé de mélange caoutchouteux (P1) recouvert par le retournement de l'armature de carcasse (A) par rapport au complexe-tringle (CT) en réalisant une expansion de la surface de réception (511), la première surface d'appui (541) étant solidaire de la surface de récention (511) et de diamètre inférieur à celui de ladite surface de réception

11. Procédé selon l'une quelconque des revendications 1 à 5, dans lequel le retournement de l'extrémité (A') de l'armature de carcasse (A) autour du profilé de mélange caoutchouteux (P1) est précédé par une opération d'escamotage de la première surface d'appui (66).

12. Procédé selon la revendication 11, complété par l'étape subséquente suivante :
- dilater radialement le profilé de mélange caoutchouteux (P1) recouvert par le retournement de l'armature de carcasse (A) par rapport au complexe-tringle (CT) en réalisant une expansion de la surface de réception (611) simultanément à une exnansion d'une deuxième surface d'appui (641) du retournement de l'armature de carcasse (A).

13. Appareillage (1 ) pour la fabrication d'un pneumatique, ledit appareillage comportant un tambour à épaulement (10) présentant une surface de réception principale (101) généralement cylindrique pour recevoir les produits à assembler, ladite surface de réception principale étant escamotable radialement, ledit tambour comportant un épaulement (102) axialement aux bords latéraux de ladite surface de réception principale (101), ledit tambour (10) étant monté sur un arbre (11), ledit appareillage comportant en outre au moins une couronne latérale associée (14, 14'), mobile axialement, montée coaxialement au tambour (10), ledit tambour (10) comportant une protubérance latérale (106) juxtaposée coaxialement à l'un de ses épaulements (102) au moins, ladite couronne latérale (14, 14') pouvant glisser axialement au moins partiellement sous ladite protubérance latérale, ladite protubérance latérale (106) formant une surface d'appui (107) quasi-cylindrique dont le diamètre extérieur est inférieur au diamètre de la surface de réception principale (101), ladite couronne latérale (14, 14') ayant une surface extérieure (141, 141') sensiblement cylindrique susceptible de dépasser axialement extérieurement de la protubérance latérale (106).

14. Appareillage selon la revendication 13, dans lequel ladite surface extérieure (141, 141') peut être escamotée en totalité sous la protubérance latérale (106).

15. Appareillage selon la revendication 13 ou 14, comportant au moins un dispositif de retroussage (12) disposé axialement extérieurement à la couronne latérale (14), le dispositif de retroussage (12) étant solidaire en translation axiale de cette dernière.

16. Appareillage selon la revendication 13, comportant au moins un dispositif de retroussage (12) disposé axialement extérieurement au tambour (10), la couronne latérale (14') étant portée par ledit tambour (10) et étant susceptible, lors dudit mouvement de glissement axial, de recouvrir partiellement le dispositif de retroussage (12).

17. Appareillage (6) pour la fabrication d'un pneumatique, ledit appareillage comportant un tambour à épaulement (60) présentant une surface de réception principale (611) généralement cylindrique pour recevoir les produits à assembler, ladite surface de réception principale étant escamotable radialement, ledit tambour (60) étant monté sur un arbre (62) et comportant un épaulement (614) axialement aux bords latéraux de ladite surface de réception principale, ledit appareillage comportant en outre au moins une virole (66) mobile axialement, montée sur l'arbre (62), ledit tambour (60) comportant au moins une protubérance latérale (64) juxtaposée à un des épaulements (614) au moins, ladite protubérance latérale (64) formant une surface d'appui (641) quasi-cylindrique dont le diamètre extérieur est inférieur au diamètre de la surface de réception principale (611), la virole (66) étant susceptible de recouvrir la surface (641) de la protubérance latérale (64).

18. Appareillage selon l'une des revendications 13 à 17, dans lequel les épaulements dudit tambour sont inclinés par rapport à la direction radiale, sans présenter de portion comprise dans un plan perpendiculaire à l'axe.

19. Tambour à épaulement (50) pour la fabrication d'un pneumatique, ledit tambour ayant un corps central (51) présentant une surface de réception principale généralement cylindrique (511), pour recevoir les produits à assembler, ladite surface de réception principale étant escamotable radialement, ledit tambour comportant un épaulement (514) axialement aux bords latéraux de ladite surface de réception principale (511), ledit corps central (51) étant monté sur un arbre (52), ledit tambour comportant des moyens d'expansion (57) du tambour (50) vers deux positions expansées distinctes, de sorte que le tambour puisse prendre trois positions stables distinctes par trois développements circonférentiels différents d'une corde enroulée autour de la surface de réception principale.

20. Tambour selon la revendication 19, comportant une protubérance latérale (54) juxtaposée coaxialement à l'un de ses épaulements (514) au moins, solidaire de ce dernier, ladite protubérance latérale (54) étant de diamètre extérieur inférieur à celui de la surface de réception (511).

21. Tambour à épaulement (70) pour la fabrication d'un pneumatique, ledit tambour ayant un corps central (71) présentant une surface de réception principale (711) généralement cylindrique, pour recevoir les produits à assembler, ladite surface de réception principale étant escamotable radialement, ledit corps central (71) étant monté sur un arbre (72), ledit tambour (70) comportant au moins une couronne latérale et une couronne intermédiaire (75, 74) montées sur l'arbre (72), la couronne intermédiaire (74) étant disposée entre l'un des épaulements (714) du corps central (71) et la couronne latérale (75), les couronnes intermédiaire et latérale (74, 75) étant solidaires en translation axiale du corps central (71) et étant expansibles radialement individuellement et indépendamment dudit corps central (71).

22. Tambour selon la revendication 21, dans lequel les épaulements (714) sont disposés axialement aux bords latéraux de ladite surface de réception principale (711).

23. Tambour selon la revendication 21 ou 22, dans lequel les diamètres extérieurs de la couronne latérale et de la couronne intermédiaire (75, 74), en position rétractée de ces dernières, sont sensiblement identiques au diamètre de la surface de réception (711) en position rétractée du corps (71), et que le diamètre extérieur de la couronne latérale (75) en position expansée de cette dernière est inférieur au diamètre extérieur de la couronne intermédiaire (74) également en position expansée de cette dernière, qui est lui-même inférieur au diamètre de la surface de réception (711) en position expansée du corps (71).

24. Tambour selon l'une des revendications 19 à 23, dans lequel les épaulements sont inclinés par rapport à la direction radiale, sans présenter de portion comprise dans un plàn perpendiculaire à l'axe.

## Patentansprüche

1. Verfahren zur Herstellung eines Reifens mit den folgenden Schritten:
- Auflegen einer Karkassenbewehrung (A) auf eine im allgemeinen zylindrische Haupt-Aufnahmeoberfläche (101, 511, 611, 711), wobei mindestens eine der seitlichen Enden (A') der Karkassenbewehrung (A) senkrecht zu einer ersten, zylindrischen Auflageoberfläche (141, 141', 541, 66, 751) aufgelegt wird, die koaxial zur Haupt-Aufnahmeoberfläche ist (101, 511, 611, 711),
- Aufbringen des Endes (A') der Karkassenbewehrung (A) auf die erste Auflageoberfläche (141, 141', 541, 66, 751),
- Auflegen eines Profils aus Kautschukmischung (P1) auf dieses Ende (A') der Karkassenbewehrung (A),
- Umschlagen des genannten, seitlichen Endes (A') um das Profil aus Kautschukmischung (P1), während man das genannte Profil im wesentlichen unbewegt hält, und
- Auflegen eines Komplexwulstkerns (CT) auf den so herbestellten Umschlag und axial im Inneren der Stelle des Auflegens des Profils.

2. Verfahren nach Anspruch 1, in welchem das andere der seitlichen Enden der Karkassenbewehrung (A) ebenfalls senkrecht zu einer zylindrischen Auflageoberfläche aufgelegt wird, die axial auf der anderen, ebenfalls koaxialen Seite an der Haupt-Aufnahmenoberfläche (101, 511, 611, 711) angeordnet ist.

3. Verfahren nach Anspruch 1, mit einem Schritt, der darin besteht, das genannte, seitliche Ende (A') der Karkassenbewehrung (A) radial nach innen umzuschlagen.

4. Verfahren nach Anspruch 1, in welchem der Umschlag des Endes (A') der Karkassenbewehrung (A) um das Profil aus Kautschukmischung (P1) hergestellt wird:
- indem man radial das genannte Ende (A') derart anhebt, daß es im wesentlichen radial ausgerichtet ist,
- indem man dann axial den Komplexwulstkern (CT) gegen die Mitte der Karkassenbewehrung (A) bis zur Auflage des Endes (A') auf dem Komplexwulstkern (CT) annähert, und
- indem man die axiale Annäherung des Komplexwulstkerns (CT) fortsetzt, der über das Profil aus Kautschukmischung (P1) hinwegläuft.

5. Verfahren nach Anspruch 4, worin man radial das Ende (A') der Karkassenbewehrung (A) anhebt, indem man radial nach außen in einer Zone des genannten Endes (A') abstützt, die axial außerhalb des Profils aus Kautschukmischung (P1) gelegen ist.

6. Verfahren nach irgendeinem der Ansprüche 1 bis 5, worin die erste Auflageoberfläche (141, 141', 541, 751) bei einem Durchmesser angeordnet ist, der kleiner ist als die Haupt-Aufnahmeoberfläche (101, 511, 711), und zwar während des Auflegens des Profils aus Kautschukmischung (P1) auf dem Ende der Karkassenbewehrung.

7. Verfahren nach Anspruch 6, worin die Auflage des Komplexwulstkerns (CT) auf dem Umschlag des Endes (A') der Karkassenbewehrung (A) senkrecht zu einer zweiten, zylindrischen, koaxialen Auflageoberfläche (107, 741) bewirkt wird, die zwischen der Haupt-Aufnahmeoberfläche (101, 711) und der ersten Auflageoberfläche (141, 141', 751) angeordnet ist, wobei der Durchmesser der Haupt-Aufnahmeoberfläche (101, 711) größer ist als der der zweiten Auflageoberfläche (107, 741), der seinerseits größer ist als der Durchmesser der ersten Auflageoberfläche (141, 141', 751).

8. Verfahren nach Anspruch 6, vervollständigt durch den folgenden, anschließenden Schritt:
- radiales Aufweiten des Profils der Kautschukmischung (P1), das durch den Umschlag der Karkassenbewehrung (A) bezüglich des Komplexwulstkerns (CT) abgedeckt ist, indem man die erste Auflageoberfläche (141, 141') einzieht und indem man eine Aufkrempelvorrichtung (12) betätigt, die unter dem Profil aus Kautschukmischung (P1) angeordnet ist, das vom Umschlag der Karkassenbewehrung (A) abgedeckt ist.

9. Verfahren nach Anspruch 7, vervollständigt durch den folgenden, anschließenden Schritt:
- radiales Aufweiten des Profils der Kautschukmischung (P1), das durch den Umschlag der Karkassenbewehrung (A) bezüglich des Komplexwulstkems (CT) abgedeckt ist, indem man eine Aufweitung der ersten Auflageoberfläche (751) bis zum Durchmesser der zweiten Auflageoberfläche (741) bewirkt.

10. Verfahren nach Anspruch 6, vervollständigt durch den folgenden, anschließenden Schritt:
- radiales Aufweiten des Profils der Kautschukmischung (P1), das durch den Umschlag der Karkassenbewehrung (A) bezüglich des Komplexwulstkems (CT) abgedeckt ist, indem man eine Aufweitung der Aufnahmeoberfläche (511) herstellt, wobei die erste Auflageoberfläche (541) fest mit der Aufnahmeoberfläche (511) verbunden ist und einen Durchmesser aufweist, der kleiner ist als der der genannten Aufnahmeoberfläche.

11. Verfahren nach irgendeinem der Ansprüche 1 bis 5, worin dem Umschlag des Endes (A') der Karkassenbewehrung (A) rund um das Profil aus Kautschukmischung (P1) ein Vorgang des Einziehens der ersten Auflageoberfläche (66) vorausgeht.

12. Verfahren nach Anspruch 11, vervollständigt durch den folgenden, anschließenden Schritt:
- radiales Aufweiten des Profils der Kautschukmischung (P1), das durch den Umschlag der Karkassenbewehrung (A) bezüglich des Komplexwulstkerns (CT) abgedeckt ist, indem man eine Aufweitung der Aufnahmeoberfläche (611) gleichzeitig zu einer Aufweitung einer zweiten Auflageoberfläche (641) des Umschlags der Karkassenbewehrung (A) herstellt.

13. Einrichtung (1) zur Herstellung eines Reifens, wobei die genannte Einrichtung eine Trommel mit Schulter (10) aufweist, die eine insgesamt zylindrische Haupt-Aufnahmeoberfläche (101) zur Aufnahme der zu konfektionierenden Produkte darbietet, wobei die genannte Haupt-Aufnahmeoberfläche radial einziehbar ist, die genannte Trommel eine Schulter (102) axial an den beiden seitlichen Rändern der genannten Haupt-Aufnahmeoberfläche (101) aufweist, die genannte Trommel (10) auf einer Welle (11) montiert ist, die genannte Einrichtung außerdem mindestens einen seitlichen, zugeordneten Kranz (14, 14') aufweist, der axial beweglich ist und koaxial zur Trommel (10) angebracht ist, die genannte Trommel (10) eine seitliche Ausstülpung (106) aufweist, die koaxial neben mindestens einer ihrer Schultern (102) angeordnet ist, der genannte, seitliche Kranz (14, 14') axial mindestens teilweise unter die genannte, seitliche Ausstülpung gleiten kann, die genannte seitliche Ausstülpung (106) eine gewissermaßen zylindrische Auflageoberfläche (107) bildet, deren Außendurchmesser kleiner ist als der Durchmesser der Haupt-Aufnahmeoberfläche (101), und der genannte, seitliche Kranz (14, 14') eine im wesentlichen zylindrische Außenoberfläche (141, 141') aufweist, die in der Lage ist, axial außerhalb der seitlichen Ausstülpung (106) vorzuspringen.

14. Einrichtung nach Anspruch 13, worin die genannte Außenoberfläche (141, 141') zur Gänze unter die seitliche Ausstülpung (106) eingezogen werden kann.

15. Einrichtung nach Anspruch 13 oder 14, mit mindestens einer Aufkrempelvorrichtung (12), die axial außerhalb des seitlichen Kranzes (14) angeordnet ist, wobei die Aufkrempelvorrichtung (12) fest mit diesem zu axialer Translationsbewegung verbunden ist.

16. Einrichtung nach Anspruch 13, mit mindestens einer Aufkrempelvorrichtung (12), die axial außerhalb der Trommel (10) angeordnet ist, wobei der seitliche Kranz (14') von der genannten Trommel (10) getragen ist und imstande ist, während der genannten, axialen Gleitbewegung teilweise die Aufkrempelvorrichtung (12) abzudecken.

17. Einrichtung (6) zur Herstellung eines Reifens, wobei die genannte Einrichtung eine Trommel mit Schulter (60) aufweist, die eine insgesamt zylindrische Haupt-Aufnahmeoberfläche (611) zur Aufnahme der zu konfektionierenden Produkte darbietet, wobei die genannte Haupt-Aufnahmeoberfläche radial einziehbar ist, die genannte Trommel (60) auf einer Welle (62) angebracht ist und axial an den seitlichen Rändern der Haupt-Aufnahmeoberfläche eine Schulter (614) aufweist, die genannte Einrichtung außerdem mindestens einen axial beweglichen Ring (66) aufweist, der auf der Welle (62) angebracht ist, die genannte Trommel (60) mindestens eine seitliche Ausstülpung (64) aufweist, die neben mindestens einer der Schultern (614) liegt, die genannte seitliche Ausstülpung (64) eine gewissermaßen zylindrische Auflageoberfläche (641) bildet, deren Außendurchmesser kleiner ist als der Durchmesser der Haupt-Aufnahmeoberfläche (611), und der Ring (66) imstande ist, die Oberfläche (641) der seitlichen Ausstülpung (64) aufzunehmen.

18. Einrichtung nach einem der Ansprüche 13 bis 17, worin die Schultern der genannten Trommel bezüglich der Radialrichtung geneigt sind, ohne einen Teil aufzuweisen, der in einer Ebene senkrecht zur Achse liegt.

19. Trommel mit Schulter (50) zur Herstellung eines Reifens, wobei die genannte Trommel einen mittigen Körper (51) aufweist, der eine insgesamt zylindrische Haupt-Aufnahmeoberfläche (511) zur Aufnahme der zu konfektionierenden Produkte darbietet, die genannte Haupt-Aufnahmeoberfläche radial einziehbar ist, die genannte Trommel axial an den beiden seitlichen Rändern der genannten Haupt-Aufnahmeoberfläche (511) eine Schulter (514) aufweist, der genannte, mittige Körper (51) an einer Welle (52) angebracht ist, und die genannte Trommel Mittel (57) zur Aufweitung der Trommel (50) zu zwei unterschiedlichen, aufgeweiteten Lagen derart aufweist, daß die Trommel drei stabile Lagen einnehmen kann, die durch drei verschiedene Umfangsabwicklungen eines Seils unterschieden sind, das um die Haupt-Aufnahmeoberfläche herumgewickelt ist.

20. Trommel nach Anspruch 19, die eine seitliche Ausstülpung (54) aufweist, die koaxial neben mindestens einer ihrer Schultern (514) liegt, die fest mit dieser verbunden ist, wobei die genannte, seitliche Ausstülpung (54) einen Außendurchmesser aufweist, der kleiner ist als der der Aufnahmeoberfläche (511).

21. Trommel mit Schulter (70) zur Herstellung eines Reifens, wobei die genannte Trommel einen mittigen Körper (71) aufweist, der eine insgesamt zylindrische Haupt-Aufnahmeoberfläche (711) zur Aufnahme der zu konfektionierenden Produkte darbietet, die genannte Haupt-Aufnahmeoberfläche radial einziehbar ist, der genannte, mittige Körper (71) auf einer Welle (72) montiert ist, die genannte Trommel (70) mindestens einen seitlichen Kranz und einen Zwischenkranz (75, 74) aufweist, die auf der Welle (72) angebracht sind, der Zwischenkranz (74) zwischen einer der Schultern (714) des mittigen Körpers (71) und dem seitlichen Kranz (75) angeordnet ist, und der Zwischenkranz und der seitliche Kranz (74, 75) bei der axialen Translationsbewegung fest mit dem mittigen Körper (71) verbunden sind und radial individuell und unabhängig vom genannten, mittigen Körper (71) aufweitbar sind.

22. Trommel nach Anspruch 21, worin die Schultern (714) axial an den seitlichen Rändern der genannten Haupt-Aufnahmeoberfläche (711) angeordnet sind.

23. Trommel nach Anspruch 21 oder 22, worin die Außendurchmesser des seitlichen Kranzes und des Zwischenkranzes (75, 74) in deren eingefahrener Lage im wesentlichen identisch mit dem Durchmesser der Aufnahmeoberfläche (711) in zurückgezogener Lage des Körpers (71) sind, und daß der Außendurchmesser des seitlichen Kranzes (75) in dessen aufgeweiteter Lage kleiner ist als der Außendurchmesser des Zwischenkranzes (74), ebenfalls in dessen aufgeweiteter Lage, der seinerseits kleiner ist als der Durchmesser der Aufnahmeoberfläche (711) in der aufgeweiteten Lage des Körpers (71).

24. Trommel nach einem der Ansprüche 19 bis 23, worin die Schultern bezüglich der Radialrichtung geneigt sind, ohne einen Teil aufzuweisen, der in einer zur Achse senkrechten Ebene liegt.

## Claims

1. A tyre manufacturing process, comprising the following steps:
- laying a carcass reinforcement (A) on a generally cylindrical main receiving surface (101, 511, 611, 711), at least one of the lateral ends (A') of the carcass reinforcement (A) being laid vertically to a first cylindrical support surface (141, 141', 541, 66, 751) coaxial with the main receiving surface (101, 511, 611, 711),
- applying the end (A') of the carcass reinforcement (A) to the first support surface (141, 141', 541, 66, 751),
- laying a section of rubber mix (P1) on this end (A') of the carcass reinforcement (A),
- turning said lateral end (A') up about the section of rubber mix (P1), while keeping said section substantially immobile,
- laying a bead-wire complex (CT) on the upturn thus produced and axially to the inside of the place where the section is laid.

2. A process according to claim 1, wherein the other one of the lateral ends of the carcass reinforcement (A) is also laid vertically to a first cylindrical support surface, arranged axially on the other side, which is also coaxial with the main receiving surface (101, 511, 611, 711).

3. A process according to claim 1, comprising a step consisting of folding said lateral end (A') of the carcass reinforcement (A) radially inwards.

4. A process according to claim 1, wherein the turning-up of the end (A') of the carcass reinforcement (A) about the section of rubber mix (P1) is accomplished:
- by radially lifting said end (A') so that it is oriented substantially radially,
- then bringing the bead-wire complex (CT) axially towards the centre of the carcass reinforcement (A) until the end (A') rests on the bead-wire complex (CT),
- and continuing the axial approach of the bead-wire complex (CT), which passes over the section of rubber mix (P1).

5. A process according to claim 4, wherein the end (A') of the carcass reinforcement (A) is lifted radially by pressing radially outwards in an area of said end (A') located axially externally to the section of rubber mix (P1).

6. A process according to any one of claims 1 to 5, wherein the first support surface (141, 141', 541, 751) is positioned at a diameter less than the main receiving surface (101, 511, 711) upon laying of the section of rubber mix (P1) on the end of the carcass reinforcement.

7. A process according to claim 6, wherein the placement of the bead-wire complex (CT) on the upturn of the end (A') of the carcass reinforcement (A) is made vertically to a second coaxial cylindrical support surface (107, 741) arranged between the main receiving surface (101, 711) and the first support surface (141, 141', 751), the diameter of the main receiving surface (101, 711) being greater than that of the second support surface (107, 741), which itself is greater than the diameter of the first support surface (141, 141', 751).

8. A process according to claim 6, completed by the following subsequent stage:
- radially dilating the section of rubber mix (P1) covered by the upturn of the carcass reinforcement (A) with respect to the bead-wire complex (CT) by retracting the first support surface (141, 141') and actuating a turn-up device (12) located beneath the section of rubber mix (P1) covered by the upturn of the carcass reinforcement (A).

9. A process according to claim 7, completed by the following subsequent stage:
- radially dilating the section of rubber mix (P1) covered by the upturn of the carcass reinforcement (A) with respect to the bead-wire complex (CT) by causing expansion of the first support surface (751) to the diameter of the second support surface (741).

10. A process according to claim 6, completed by the following subsequent stage:
- radially dilating the section of rubber mix (P1) covered by the upturn of the carcass reinforcement (A) with respect to the bead-wire complex (CT) by causing expansion of the receiving surface (511), the first support surface (541) being integral with the receiving surface (511) and of diameter less than that of said receiving surface.

11. A process according to any one of claims 1 to 5, wherein the turning-up of the end (A') of the carcass reinforcement (A) about the section of rubber mix (P1) is preceded by an operation of retracting the first support surface (66).

12. A process according to claim 11, completed by the following subsequent stage:
- radially dilating the section of rubber mix (P1) covered by the upturn of the carcass reinforcement (A) with respect to the bead-wire complex (CT) by causing expansion of the receiving surface (611) simultaneously with expansion of a second support surface (641) of the upturn of the carcass reinforcement (A).

13. An apparatus (1) for manufacturing a tyre, said apparatus comprising a shoulder drum (10) having a generally cylindrical main receiving surface (101) to receive the products to be assembled, said main receiving surface being radially retractable, said drum comprising a shoulder (102) axially to the lateral edges of said main receiving surface (101), said drum (10) being mounted on a shaft (11), said apparatus further comprising at least one associated axially movable lateral crown (14, 14') mounted coaxial with said drum (10), said drum (10) comprising a lateral protuberance (106) juxtaposed coaxially to at least one of its shoulders (102), said lateral crown (14, 14') being capable of sliding axially at least partly under said lateral protuberance, said lateral protuberance (106) forming a quasi-cylindrical support surface (107) whose external diameter is less than the diameter of the main receiving surface (101), said lateral crown (14, 14') having a substantially cylindrical outer surface (141, 141') capable of passing axially outside of said lateral protuberance (106).

14. An apparatus according to claim 13, wherein said outer surface (141, 141') can be retracted completely under the lateral protuberance (106).

15. An apparatus according to claim 13 or 14, comprising at least one turn-up device (12) located axially outside of said lateral crown (14), said turn-up device (12) being integral with the latter in axial translation.

16. An apparatus according to claim 13, comprising at least one turn-up device (12) arranged axially outside of said drum (10), the lateral crown (14') being borne by said drum (10) and capable, upon said axial sliding movement, of partly covering said turn-up device (12).

17. An apparatus (6) for manufacturing a tyre, said apparatus comprising a shoulder drum (60) having a generally cylindrical main receiving surface (611) to receive the products to be assembled, said main receiving surface being radially retractable, said drum (60) being mounted on a shaft (62) and comprising a shoulder (614) axially to the lateral edges of said main receiving surface, said apparatus further comprising at least one axially movable collar (66), mounted on the shaft (62), said drum (60) comprising at least one lateral protuberance (64) juxtaposed with at least one of the shoulders (614), said lateral protuberance (64) forming a quasi-cylindrical support surface (641) whose external diameter is less than the diameter of the main receiving surface (611), the collar (66) being capable of covering the surface (641) of the lateral protuberance (64).

18. An apparatus according to one of claims 13 to 17, wherein the shoulders of said drum are inclined relative to the radial direction, without having any portion contained in a plane perpendicular to the axis.

19. A shoulder drum (50) for manufacturing a tyre, said drum having a central body (51) having a generally cylindrical main receiving surface (511) to receive the products to be assembled, said main receiving surface being radially retractable, said drum comprising a shoulder (514) axially to the lateral edges of said main receiving surface (511), said central body (51) being mounted on a shaft (52), said drum comprising expansion means (57) for the drum (50) into two distinct expanded positions, such that the drum can assume three distinct stable radial positions by three different circumferential developments of a cord wound about the main receiving surface.

20. A drum according to claim 19, comprising a lateral protuberance (54) juxtaposed coaxially to at least one of its shoulders (514), integral with the latter, said lateral protuberance (54) having an external diameter less than that of the receiving surface (511).

21. A shoulder drum (70) for manufacturing a tyre, said drum having a central body (71) having a generally cylindrical main receiving surface (711) to receive the products to be assembled, said main receiving surface being radially retractable, said central body (71) being mounted on a shaft (72), said drum (70) comprising at least one lateral crown and an intermediate crown (75, 74) which are mounted on the shaft (72), the intermediate crown (74) being arranged between one of the shoulders (714) of the central body (71) and the lateral crown (75), the intermediate and lateral crowns (74, 75) being integral in axial translation with said central body (71) and being radially expandable individually and independently of said central body (71).

22. A drum according to claim 21, wherein the shoulders (714) are arranged axially to the lateral edges of said main receiving surface (711).

23. A drum according to claim 21 or 22, wherein the external diameters of the lateral crown and the intermediate crown (75, 74), in the retracted positions of the latter, are substantially identical to the diameter of the receiving surface (711) in the retracted position of the body (71), and that the external diameter of the lateral crown (75) in the expanded position of the latter is less than the external diameter of the intermediate crown (74) also in the expanded position of the latter, which itself is less than the diameter of the receiving surface (711) in the expanded position of the body (71).

24. A drum according to one of claims 19 to 23, wherein the shoulders are inclined with respect to the radial direction, without having any portion contained in a plane perpendicular to the axis.
